# EUROPEAN PATENT APPLICATION

(11) **EP 4 488 063 A1**
(43) Date of publication of application: **08.01.2025**
(21) Application number: 23763319.3
(22) Date of filing: 21.02.2023
(51) Int. Cl.: B32B 27/00, B32B 9/00, B32B 27/40, C08G 18/00, C08G 18/08, C08G 18/10, C08G 18/32, C08G 18/76, C09D 175/04, C09J 175/04

(54) **LAMINATE**

(30) Priority: 01.03.2022 JP 2022031296; 01.04.2022 JP 2022062003
(71) Applicant: Mitsui Chemicals, Inc., Tokyo 104-0028 (JP)
(72) Inventor: SUGIHARA, Tomoki, Sodegaura-shi, Chiba 299-0265 (JP); FUKUDA, Kazuyuki, Sodegaura-shi, Chiba 299-0265 (JP); NAKAGAWA, Toshihiko, Sodegaura-shi, Chiba 299-0265 (JP); KOUDA, Chikako, Sodegaura-shi, Chiba 299-0265 (JP); SHIMOKAWATOKO, Yoshiki, Sodegaura-shi, Chiba 299-0265 (JP)
(74) Representative: Hoffmann Eitle
(86) International application number: PCT/JP2023/006296
(87) International publication number: WO 2023/167060

(57) **Abstract**

A laminate 1 includes a substrate 2, an inorganic vapor deposition layer 3, an adhesive layer 5, and a resin film layer 6 in sequence. A barrier coat layer 4 is interposed between the substrate 2 and the inorganic vapor deposition layer 3 and/or between the inorganic vapor deposition layer 3 and the adhesive layer 5. The adhesive layer 5 has a thermal expansion coefficient of 100.0×10⁻⁵K⁻¹ or less.

## Description

### TECHNICAL FIELD

The present invention relates to a laminate.

### BACKGROUND ART

A laminate film having gas barrier properties has been known as a packaging material. Such a laminate film is produced, for example, by a method below. That is to say, first, a metal vapor deposition layer consisting of aluminum oxide is laminated on one surface of a polyester film. Next, a coating composition including a polyurethane dispersion is applied onto the metal vapor deposition layer, thereby forming a barrier coat layer. Next, a mixture of Takelac A-977 (a trade name, manufactured by Mitsui Chemicals Inc.) and TAKENATE A-3(a trade name, manufactured by Mitsui Chemicals Inc.) is applied onto the barrier coat layer, thereby forming an adhesive layer. Thereafter, a polypropylene film is laminated on the adhesive layer. In this manner, a laminate film is produced (for example, see Patent Document 1 (Examples 1 to 9 and Evaluations)).

### Citation List

### Patent Document

Patent Document 1: Japanese Unexamined Patent Publication No. 2019-085511

### SUMMARY OF THE INVENTION

### PROBLEM TO BE SOLVED BY THE INVENTION

The above-described laminate film has an excellent moist heat resistance (retort resistance). However, the laminate film is required to have a more excellent moist heat resistance.

The present invention provides a laminate having an excellent moist heat resistance.

### MEANS FOR SOLVING THE PROBLEM

The present invention [1] includes a laminate including: a substrate; an inorganic vapor deposition layer; an adhesive layer; and a resin film layer in sequence, wherein a barrier coat layer is interposed between the substrate and the inorganic vapor deposition layer and/or between the inorganic vapor deposition layer and the adhesive layer, and wherein the adhesive layer has a thermal expansion coefficient of 100.0×10⁻⁵K⁻¹ or less.

The present invention [2] includes the laminate described in the above-described [1], wherein the barrier coat layer contains a polyurethane resin.

The present invention [3] includes the laminate described in the above-described [2], wherein the polyurethane resin includes a reaction product of an isocyanate group-terminated prepolymer and a chain extender, and wherein the isocyanate group-terminated prepolymer includes a reaction product of a polyisocyanate component containing xylylene diisocyanate and an active hydrogen group-containing component containing a short chain diol having 2 to 6 carbon atoms and an active hydrogen group-containing compound containing a hydrophilic group.

The present invention [4] includes the laminate described in any one of the above-described [1] to [3], wherein the adhesive layer is a cured coating film of a two-component curable polyurethane adhesive including a main agent and a curing agent, and
wherein the curing agent includes an araliphatic polyisocyanate derivative and/or an aliphatic polyisocyanate derivative.

The present invention [5] includes the laminate described in any one of the above-described [1] to [4], wherein the adhesive layer contains an ester group, and wherein a content ratio of the ester group to the adhesive layer is 7.00 mmol/g or more.

The present invention [6] includes the laminate described in any one of the above-described [1] to [5], wherein the chain extender contains ethylenediamine.

The present invention [7] includes the laminate described in any one of the above-described [1] to [6], wherein the barrier coat layer has a thermal expansion coefficient of 200×10⁻⁵K⁻¹ or less.

The present invention [8] includes the laminate described in any one of the above-described [1] to [7], wherein the polyurethane dispersion includes a cross-linking agent, and wherein the cross-linking agent contains at least one selected from the group consisting of an epoxy silane, a water-dispersible isocyanate, and a carbodiimide compound.

### EFFECTS OF THE INVENTION

In the laminate of the present invention, the barrier coat layer is interposed between the substrate and the inorganic vapor deposition layer and/or between the inorganic vapor deposition layer and the adhesive layer. Furthermore, the adhesive layer has a thermal expansion coefficient of a predetermined value or less. Therefore, the laminate of the present invention has an excellent moist heat resistance.

### BRIEF DESCRIPTION OF THE DRAWINGS

FIG. 1 is a schematic configuration view for showing the first embodiment of the laminate of the present invention.
FIG. 2 is a schematic configuration view for showing the second embodiment of the laminate of the present invention.
FIG. 3 is a schematic configuration view for showing the third embodiment of the laminate of the present invention.

### DESCRIPTION OF THE EMBODIMENTS

### 1. First Embodiment

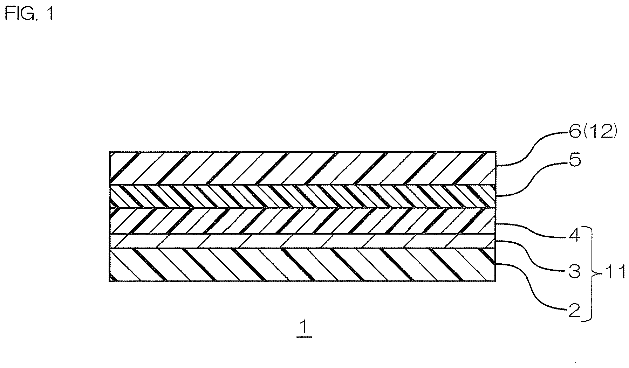

In FIG. 1, a laminate 1 includes a substrate 2, an inorganic vapor deposition layer 3, an adhesive layer 5, and a resin film layer 6 in sequence. Furthermore, a barrier coat layer 4 is interposed between the inorganic vapor deposition layer 3 and the adhesive layer 5.

In other words, in FIG. 1, the substrate 2, the inorganic vapor deposition layer 3, the barrier coat layer 4, the adhesive layer 5, and the resin film layer 6 are laminated in sequence along a thickness direction of the laminate 1.

More specifically, the laminate 1 is formed, for example, by adhering a first film 11 including the substrate 2, the inorganic vapor deposition layer 3, and the barrier coat layer 4 to a second film 12 including the resin film layer 6 though the adhesive layer 5. Hereinafter, the first film 11, the second film 12, and the adhesive layer 5 are detailed below.

### (1) First Film 11

The first film 11 includes the substrate 2, the inorganic vapor deposition layer 3, and the barrier coat layer 4 in sequence along the thickness direction of the first film 11. That is to say, the first film 11 includes the substrate 2, the inorganic vapor deposition layer 3 laminated and disposed on one surface of the substrate 2, and the barrier coat layer 4 laminated and disposed on one surface of the inorganic vapor deposition layer 3.

Examples of the substrate 2 includes a plastic substrate, a fiber substrate, a metal substrate, and a ceramic substrate. These can be used alone or in combination of two or more. As the substrate 2, preferably, a plastic substrate is used.

The plastic substrate is, for example, a film made of plastic. Examples of the plastic include thermoplastic resin and thermosetting resin. Preferably, thermoplastic resin is used. Examples of the thermoplastic resin include a polyolefin resin, a polyester resin, a polyamide resin, a vinyl resin, an acrylic resin, a polycarbonate resin, and a cellulose resin. These can be used alone or in combination of two or more. As the thermoplastic resin, preferably, a polyolefin resin and a polyester resin are used. Examples of a substrate 2 made of plastic include a cast substrate, an uniaxially oriented substrate, and a biaxially oriented substrate. Preferably, a biaxially oriented substrate is used.

The substrate 2 can be a single layer or a plurality of layers. Furthermore, the substrate 2 may be subjected to a surface treatment. Examples of the surface treatment include a corona discharge treatment and an anchor coat treatment. Examples of the shape of the substrate 2 includes a sheet shape, a bolt shape, and a cup shape.

The substrate 2 has a thickness of, for example, 3 µm or more, preferably 5 µm or more. Furthermore, the substrate 2 has a thickness of, for example, 500 µm or less, preferably 200 µm or less.

As the substrate 2, preferably, a polyolefin resin is used. More specifically, in terms of being a mono material (single material), preferably, the raw material resin of the substrate 2 and the raw material resin of the resin film layer 6 (described below) are the same. In light thereof, in terms of being a mono material (single material), as the substrate 2, preferably, a polyolefin resin is used, more preferably, a biaxially oriented polypropylene film is used.

The inorganic vapor deposition layer 3 is disposed on the one surface of the substrate 2 so as to be in contact with the substrate 2. More specifically, the inorganic vapor deposition layer 3 is formed by vapor depositing an inorganic material on the one surface of the substrate 2.

Examples of the inorganic material include a metal and a metal oxide. Examples of the metal include magnesium, calcium, barium, titanium, zirconium, aluminum, indium, silicon, germanium, and tin. Examples of the metal oxide include aluminum oxide, magnesium oxide, titanium oxide, indium oxide, silicon oxide, silicon nitride oxide, cerium oxide, calcium oxide, and tin oxide. Furthermore, examples of the inorganic material include a diamond-shaped carbon film. These can be used alone or in combination of two or more. As the inorganic material, in terms of the gas barrier properties, preferably, a metal oxide is used, more preferably, aluminum oxide (alumina) and silicon oxide (silica) are used, even more preferably, aluminum oxide (alumina) is used alone, and silicon oxide (silica) is used alone.

Examples of the method of forming the inorganic vapor deposition layer 3 include a vacuum process. The vacuum process is not especially limited, and examples thereof include a vacuum deposition method, a sputtering method, an ion plating method, and a chemical vapor deposition method (CVD method). As the vacuum process, preferably, a vacuum deposition method is used. Examples of the heating method in the vacuum deposition method include an electron beam heating method, a resistive heating method, and an induction heating method.

The thickness of the inorganic vapor deposition layer 3 is appropriately set depending on the type of the inorganic material. The inorganic vapor deposition layer 3 has a thickness of, for example, 1 nm or more, preferably 5 nm or more. Furthermore, the inorganic vapor deposition layer 3 has a thickness of, for example, 500 nm or less, preferably 200 nm or less.

The barrier coat layer 4 is a layer having a property to reduce oxygen permeability. The barrier coat layer 4 is a resin layer including a resin having barrier properties. In FIG. 1, the barrier coat layer 4 is disposed on the one surface of the inorganic vapor deposition layer 3 so as to be in contact with the inorganic vapor deposition layer 3. In other words, in FIG. 1, the barrier coat layer 4 is an overcoat layer of the inorganic vapor deposition layer 3.

The barrier coat layer 4 including a resin having barrier properties is laminated on the substrate 2 and the inorganic vapor deposition layer 3 and/or interposed between the substrate 2 and the inorganic vapor deposition layer 3, thereby improving the gas barrier properties of the substrate 2 and the inorganic vapor deposition layer 3.

More specifically, with respect to the oxygen permeation amount (cc/m²•day•atm) of a two-layered sheet including the substrate 2 (for example, a 12 µm PET) and the inorganic vapor deposition layer 3 (for example, a 20 nm aluminum oxide), the oxygen permeation amount (cc/m²•day•atm) of a three-layered sheet including the substrate 2 (for example, a 12 µm PET), the inorganic vapor deposition layer 3 (for example, a 20 nm aluminum oxide), and the barrier coat layer 4 (for example, 0.5 µm) is 80% or less, preferably 50% or less. The oxygen permeation amount is measured in accordance with Examples described below.

The resin having barrier properties is a resin having a property to reduce oxygen permeability. More specifically, examples thereof include a high crystallinity resin. Examples of the high crystallinity resin include a polyurethane resin (include a polyacrylic urethane resin), a polyvinyl alcohol resin, an ethylene-vinyl alcohol resin, a polyacrylonitrile resin, a polyamide resin, a polyester resin, and a polyacrylic resin. These can be used alone or in combination of two or more.

As the resin having barrier properties, in terms of the gas barrier properties, preferably, a polyurethane resin and a polyvinyl alcohol resin are used, more preferably, a polyurethane resin is used. In other words, the barrier coat layer 4 preferably contains a polyurethane resin and/or a polyvinyl alcohol resin, more preferably, contains a polyurethane resin.

Furthermore, as the resin having barrier properties, in terms of the pot life, preferably, a polyurethane resin (including a polyacrylic urethane resin) is used alone, and a polyurethane resin and a polyvinyl alcohol resin are used in combination, more preferably, a polyurethane resin (including a polyacrylic urethane resin) is used alone, even more preferably, a polyurethane resin (except for a polyacrylic urethane resin) is used alone.

The polyurethane resin is not especially limited, and examples thereof include an aqueous polyurethane resin and a solvent-based polyurethane resin. These can be used alone or in combination of two or more. As the polyurethane resin, in terms of the pot life, preferably, an aqueous polyurethane resin is used. The aqueous polyurethane resin is produced, for example, by a method described below. That is to say, the barrier coat layer 4 is preferably formed as a dried coating film by applying a polyurethane dispersion on the one surface of the inorganic vapor deposition layer 3 and drying it.

The polyurethane dispersion is an aqueous dispersion including a polyurethane resin (preferably, an aqueous polyurethane resin).

More specifically, the polyurethane resin is produced by the reaction between an isocyanate group-terminated prepolymer and a chain extender. The isocyanate group-terminated prepolymer is produced by the reaction between a polyisocyanate component and an active hydrogen group-containing component. In other words, the isocyanate group-terminated prepolymer is a primary reaction product of the polyisocyanate component and the active hydrogen group-containing component. The polyurethane resin is a secondary reaction product of the isocyanate group-terminated prepolymer and the chain extender.

The polyurethane dispersion is produced, for example, by a method below. In this method, first, an isocyanate group-terminated prepolymer is synthesized. The isocyanate group-terminated prepolymer is a polyurethane prepolymer having two or more free isocyanate groups at its molecular terminal. The isocyanate group-terminated prepolymer is, as described above, produced by the reaction of a polyisocyanate component and an active hydrogen group-containing component.

The polyisocyanate component contains xylylene diisocyanate as an essential component. Examples of the xylylene diisocyanate include a xylylene diisocyanate monomer (XDI monomer) and a xylylene diisocyanate derivative (XDI derivative).

Examples of the xylylene diisocyanate monomer include 1,2-xylylene diisocyanate, 1,3-xylylene diisocyanate, and 1,4-xylylene diisocyanate. These xylylene diisocyanate monomers can be used alone or in combination of two or more. As the xylylene diisocyanate monomer, preferably, 1,3-xylylene diisocyanate and 1,4-xylylene diisocyanate are used, more preferably, 1,3-xylylene diisocyanate is used.

Examples of the xylylene diisocyanate derivatives include a modified product produced by modifying the above-described xylylene diisocyanate monomer by a known method. Examples of the modified product include a multimer, an allophanate-modified product, a polyol-modified product, a biuret-modified product, a urea-modified product, an oxadiazinetrione-modified product, and a carbodiimide-modified product. These can be used alone or in combination of two or more.

These xylylene diisocyanates can be used alone or in combination of two or more. As the xylylene diisocyanate, preferably, a xylylene diisocyanate monomer is used, more preferably, 1,3-xylylene diisocyanate is used.

The polyisocyanate component can contain another polyisocyanate as an optional component. The other polyisocyanate is polyisocyanate except for xylylene diisocyanate.

Examples of the polyisocyanate include polyisocyanate industrially widely used. More specifically, examples thereof include an aromatic polyisocyanate, an araliphatic polyisocyanate (except for xylylene diisocyanate), and an aliphatic polyisocyanate. Furthermore, the other polyisocyanate includes the same types of derivatives as described above.

The other polyisocyanates can be used alone or in combination of two or more.

As the other polyisocyanate, preferably, an aliphatic polyisocyanate is used. Examples of the aliphatic polyisocyanate include a chain aliphatic polyisocyanate and an alicyclic polyisocyanate. Preferably, an alicyclic polyisocyanate is used.

Examples of the alicyclic polyisocyanate include an alicyclic polyisocyanate monomer and an alicyclic polyisocyanate derivative. Preferably, an alicyclic polyisocyanate monomer is used. Examples of the alicyclic polyisocyanate monomer include bis(isocyanatomethyl)cyclohexane (H₆XDI), methylenebis(cyclohexyl isocyanate) (H₁₂MDI), isophorone diisocyanate (IPDI), and norbornane diisocyanate (NBDI). These can be used alone or in combination of two or more. As the alicyclic polyisocyanate monomer, preferably, bis(isocyanatomethyl)cyclohexane (H₆XDI) and methylenebis(cyclohexyl isocyanate) (H₁₂MDI) are used. More preferably, methylenebis(cyclohexyl isocyanate) (H₁₂MDI) is used.

When the polyisocyanate component contains the other polyisocyanate, the content ratio of the other polyisocyanate is appropriately set in a range that does not reduce the excellent effects of the present invention.

For example, when xylylene diisocyanate and the other polyisocyanate (preferably, an alicyclic polyisocyanate) are used in combination, the xylylene diisocyanate with respect to the total moles of them is, for example, 50 mol% or more, preferably 60 mol% or more, more preferably 70 mol% or more, even more preferably 80 mol% or more. Furthermore, the xylylene diisocyanate with respect to the total moles of them is, for example, 99.9 mol% or less, preferably 99 mol% or less, more preferably 95 mol% or less, even more preferably 90 mol% or less.

Furthermore, when xylylene diisocyanate and the other polyisocyanate (preferably, an alicyclic polyisocyanate) are used in combination, the other polyisocyanate (preferably, an alicyclic polyisocyanate) with respect to the total moles of them is, for example, 0.1 mol% or more, preferably 1 mol% or more, more preferably 5 mol% or more, even more preferably 10 mol% or more. Furthermore, the other polyisocyanate (preferably, an alicyclic polyisocyanate) with respect to the total moles of them is, for example, 50 mol% or less, preferably 40 mol% or less, more preferably 30 mol% or less, even more preferably 20 mol% or less.

Examples of the active hydrogen group-containing component include a polyol component having a plurality of hydroxyl groups as active hydrogen groups, and a polyamine component having a plurality of amino groups as active hydrogen groups. The active hydrogen group-containing component contains a short chain diol having 2 to 6 carbon atoms and an active hydrogen group-containing compound containing a hydrophilic group as essential components.

The short chain diol having 2 to 6 carbon atoms is an organic compound having two hydroxyl groups and having 2 to 6 carbon atoms. The short chain diol has a molecular weight of 50 or more and less than 650. When the short chain diol has a molecular weight distribution, the molecular weight indicates the number average molecular weight in terms of polystyrene by a GPC measurement.

Examples of the short chain diol include an alkane diol having 2 to 6 carbon atoms, an ether diol having 2 to 6 carbon atoms, and an alkene diol having 2 to 6 carbon atoms.

Examples of the alkane diol having 2 to 6 carbon atoms include ethylene glycol, propylene glycol, 1,3-propane diol, 1,4-butylene glycol, 1,3-butylene glycol, 1,2-butylene glycol, 1,5-pentanediol, 1,6-hexanediol, neopentyl glycol, 3-methyl-1,5-pentanediol, 1,3-cyclohexanediol, and 1,4-cyclohexanediol. Examples of the ether diol having 2 to 6 carbon atoms include diethylene glycol, triethylene glycol, and dipropylene glycol. Examples of the alkene diol having 2 to 6 carbon atoms include 1,4-dihydroxy-2-butene. These short chain diols can be used alone or in combination of two or more. As the short chain diol, in terms of the gas barrier properties, preferably, an alkane diol having 2 to 6 carbon atoms is used, more preferably, an ethylene glycol is used.

The content ratio of the short chain diol having 2 to 6 carbon atoms with respect to 100 parts by mass of the total amount of the active hydrogen group-containing component is, for example, 10 parts by mass or more, preferably 30 parts by mass or more, more preferably 50 parts by mass or more and, for example, 90 parts by mass or less, preferably 80 parts by mass or less, more preferably 70 parts by mass or less.

The active hydrogen group-containing compound containing a hydrophilic group is a compound containing a hydrophilic group and an active hydrogen group. Examples of the active hydrogen group include a hydroxyl group and an amino group.

Furthermore, examples of the hydrophilic group include a nonionic group and an ionic group. More specifically, examples of the active hydrogen group-containing compound containing a hydrophilic group include an active hydrogen group-containing compound containing a nonionic group and an active hydrogen group-containing compound containing an ionic group.

The active hydrogen group-containing compound containing a nonionic group is a compound having one or more nonionic group(s) and two or more active hydrogen groups in combination. Examples of the nonionic group include a polyoxyethylene group. Examples of the active hydrogen group-containing compound containing a nonionic group include a polyoxyethylene glycol, a one end-capped polyoxyethylene glycol, and a polyol containing a polyoxyethylene side chain.

Examples of the active hydrogen group-containing compound containing an ionic group include an active hydrogen group-containing compound containing an anionic group and an active hydrogen group-containing compound containing a cationic group. The active hydrogen group-containing compound containing an anionic group is a compound having one or more anionic group(s) and two or more active hydrogen groups in combination. Examples of the anionic group include a carboxy group (a carboxylic acid group), and a sulfo group (a sulfonic acid group). The active hydrogen group-containing compound containing a cationic group is a compound having one or more cationic group(s) and two or more active hydrogen groups in combination. Examples of the cationic group include a quaternary ammonium group.

These active hydrogen group-containing compounds containing a hydrophilic group can be used alone or in combination of two or more. As the active hydrogen group-containing compound containing a hydrophilic group, preferably, an active hydrogen group-containing compound containing an anionic group.

For the active hydrogen group-containing compound containing an anionic group, examples of the anionic group include a carboxy group (a carboxylic acid group) and a sulfo group (a sulfonic acid group).

In terms of the gas barrier properties and the water resistance, as the anionic group, preferably, a carboxy group is used. For the active hydrogen group-containing compound containing an ionic group, examples of the active hydrogen group include a hydroxyl group and an amino group. Preferably, a hydroxyl group is used.

That is to say, as the active hydrogen group-containing compound containing an anionic group, preferably, an organic compound having a carboxy group and two hydroxyl groups in combination is used.

Examples of the organic compound having a carboxy group and two hydroxyl groups in combination include a carboxy group-containing polyol. Examples of the carboxy group-containing polyol include polyhydroxyalkanoic acid. Examples of the polyhydroxyalkanoic acid include 2,2-dimethylol acetic acid, 2,2-dimethylol lactate, 2,2-dimethylol propionic acid (also referred to as: dimethylol propionic acid), 2,2-dimethylol butanoic acid, 2,2-dimethylol butyric acid, and 2,2-dimethylol valeric acid. These organic compounds having a carboxy group and two hydroxyl groups in combination can be used alone or in combination of two or more. As the organic compound having a carboxy group and two hydroxyl groups in combination, preferably, a carboxy group-containing polyol is used, more preferably, polyhydroxyalkanoic acid is used, even more preferably, 2,2-dimethylol propionic acid is used.

The content ratio of the active hydrogen group-containing compound containing a hydrophilic group to 100 parts by mass of the total amount of the active hydrogen group-containing component is, for example, 10 parts by mass or more, preferably 20 parts by mass or more and, for example, 50 parts by mass or less, preferably 40 parts by mass or less.

Furthermore, the active hydrogen group-containing component can further contain another low molecular weight polyol as an optional component. The other low molecular weight polyol is a low molecular weight polyol except for the short chain diol having 2 to 6 carbon atoms and the active hydrogen group-containing compound containing a hydrophilic group. The low molecular weight polyol is an organic compound having two or more hydroxyl groups in its molecule and a relatively low molecular weight. The low molecular weight polyol has a molecular weight of 50 or more and less than 650, preferably 500 or less, more preferably 400 or less. Examples of the low molecular weight polyol include a diol having 7 or more carbon atoms and a trihydric or more low molecular weight polyol.

Examples of the diol having 7 or more carbon atoms include alkane(7 to 20 carbon atoms)-1,2-diol, 2,6-dimethyl-1-octene-3,8-diol, 1,3-cyclohexane dimethanol, 1,4-cyclohexane dimethanol, a hydrogenated bisphenol A, and a bisphenol A. These diols having 7 or more carbon atoms can be used alone or in combination of two or more.

Examples of the trihydric or more low molecular weight polyol include a trihydric alcohol and a tetrahydric alcohol. Examples of the trihydric alcohol include glycerine, 2-methyl-2-hydroxymethyl-1,3-propanediol, 2,4-dihydroxy-3-hydroxymethylpentane, 1,2,6-hexanetriol, trimethylolpropane, and 2,2-bis(hydroxymethyl)-3-butanol. Examples of the tetrahydric alcohol include pentaerythritol and diglycerine. These trihydric or more low molecular weight polyols can be used alone or in combination of two or more.

Furthermore, examples of the other low molecular weight polyol include a polyether polyol having a number average molecular weight of less than 650, a polyester polyol having a number average molecular weight of less than 650, and a polycarbonate polyol having a number average molecular weight of less than 650.

The other low molecular weight polyols can be used alone or in combination of two or more. In terms of the water resistance and the water dispersion stability, as the other low molecular weight polyol, preferably, a trihydric or more low molecular weight polyol is used, more preferably, a trihydric alcohol is used, particularly preferably a trimethylol propane is used.

When the active hydrogen group-containing component contains a trihydric or more alcohol, the ratio of the trihydric or more alcohol to the total amount of the active hydrogen group-containing component is, for example, 0.1 mol% or more, preferably 1 mol% or more, more preferably 3 mol% or more and, for example, 30 mol% or less, preferably 15 mol% or less, more preferably 10 mol% or less. The molar ratio of the trihydric or more alcohol in the active hydrogen group-containing component is calculated based on the hydroxyl group equivalent weight (molecular weight/number of hydroxyl groups) and the blended amount by a known method.

Furthermore, when the active hydrogen group-containing component contains the other low molecular weight polyol, the content ratio of the other low molecular weight polyol to 100 parts by mass of the total amount of the active hydrogen group-containing component is, for example, 0.2 parts by mass or more, preferably 1 part by mass or more, more preferably 2 parts by mass or more and, for example, 20 parts by mass or less, preferably 10 parts by mass or less, more preferably 8 parts by mass or less.

Furthermore, as the combination ratios of the short chain diol having 2 to 6 carbon atoms and the other low molecular weight polyol with respect to 100 parts by mass of the total amount thereof, the other low molecular weight polyol is, for example, 2 parts by mass or more, preferably 5 parts by mass or more and, for example, 20 parts by mass or less, preferably 15 parts by mass or less, more preferably 10 parts by mass or less.

Furthermore, with respect to 100 parts by mass of the total amount of the short chain diol having 2 to 6 carbon atoms and the other low molecular weight polyol, the active hydrogen group-containing compound containing a hydrophilic group is, for example, 10 parts by mass or more, preferably 20 parts by mass or more, more preferably 40 parts by mass or more and, for example, 90 parts by mass or less, preferably 80 parts by mass or less, more preferably 70 parts by mass or less.

When the content ratio of the other low molecular weight polyol is in the above-described range, excellent dispersibility is secured.

Furthermore, the active hydrogen group-containing component can further contain a high molecular weight polyol as an optional component. The high molecular weight polyol is an organic compound (polymer) having two or more hydroxyl groups in its molecule and having a relatively high molecular weight. The high molecular weight polyol has a number average molecular weight of, for example, 650 or more, preferably 1000 or more and, for example, 20000 or less. Examples of the high molecular weight polyol include a polyether polyol, a polyester polyol, a polycarbonate polyol, a polyurethane polyol, an epoxy polyol, a vegetable oil polyol, a polyolefin polyol, an acrylic polyol, and a vinyl monomer-modified polyol. These high molecular weight polyols can be used alone or in combination of two or more.

In terms of improving the gas barrier properties, the active hydrogen group-containing component preferably does not contain a high molecular weight polyol. That is to say, the active hydrogen group-containing component preferably consists of a short chain diol having 2 to 6 carbon atoms, a trihydric or more low molecular weight polyol, and an active hydrogen group-containing compound containing a hydrophilic group, or consists of a short chain diol having 2 to 6 carbon atoms and an active hydrogen group-containing compound containing a hydrophilic group. The active hydrogen group-containing component more preferably consists of a short chain diol having 2 to 6 carbon atoms, a trihydric or more low molecular weight polyol, and an active hydrogen group-containing compound containing an anionic group, or consists of a short chain diol having 2 to 6 carbon atoms and an active hydrogen group-containing compound containing an anionic group.

The isocyanate group-terminated prepolymer is produced by reacting each of the above-described components in a predetermined equivalent ratio. In the synthesis of the isocyanate group-terminated prepolymer, the equivalent ratio means the equivalent ratio (isocyanate group/active hydrogen group) of the isocyanate group to the active hydrogen group (hydroxyl group). The equivalent ratio (isocyanate group/active hydrogen group) is, for example, more than 1, preferably 1.1 or more. Furthermore, the equivalent ratio (isocyanate group/active hydrogen group) is, for example, 20 or less, preferably 10 or less.

Furthermore, in the synthesis of the isocyanate group-terminated prepolymer, a known polymerization method is used. Examples of the polymerization method include bulk polymerization and solution polymerization. As the polymerization method, in terms of the adjustment of reactivity, solution polymerization is preferably used. In bulk polymerization, for example, the above-described components are blended and reacted under a nitrogen atmosphere. The reaction temperature is, for example, 75 to 85°C. The reaction time is, for example, 1 to 20 hour(s). In solution polymerization, for example, the above-described components are blended and reacted in an organic solvent under a nitrogen atmosphere. The reaction temperature is, for example, 20 to 80°C. The reaction time is, for example, 1 to 20 hour(s). Examples of the organic solvent include a solvent inert to the isocyanate group.

Furthermore, in the above-described polymerization, as necessary, a catalyst can be added. Examples of the catalyst include an amine-based catalyst and an organic metal catalyst. These catalysts can be used alone or in combination of two or more. The adding amount of the catalyst is appropriately set depending on the purpose and use.

Further, in this method, the above-described polymerization is completed, for example, when the isocyanate group concentration in the reaction product reaches the range described below. Furthermore, in this method, the unreacted polyisocyanate component can be removed by a known removal method. Examples of the removal method include distillation and extraction. In this manner, an isocyanate group-terminated prepolymer is produced.

The isocyanate group-terminated prepolymer has a isocyanate group concentration of, for example, 4% by mass or more, preferably 5% by mass or more, more preferably 6% by mass or more. Furthermore, the isocyanate group-terminated prepolymer has a isocyanate group concentration of, for example, 25% by mass or less, preferably 20% by mass or less, more preferably 17% by mass or less, even more preferably 15% by mass or less.

Furthermore, the isocyanate group has an average functionality of, for example, 1.5 or more, preferably 1.9 or more, more preferably 2.0 or more. Furthermore, the isocyanate group has an average functionality of, for example, 3.0 or less, preferably 2.5 or less.

Furthermore, when the isocyanate group-terminated prepolymer contains an anionic group, for example, a neutralizing agent is added to the isocyanate group-terminated prepolymer in order to neutralize the isocyanate group-terminated prepolymer and form the salt of the anionic group. Examples of the neutralizing agent include a conventional base. Specifically, examples of the base include an organic base and an inorganic base.

Examples of the organic base include a tertiary amine and a secondary amine. Examples of the tertiary amine include trialkylamine and alkanolamine. Examples of the trialkylamine include trialkylamine having 1 to 4 carbon atom(s). Examples of the trialkylamine having 1 to 4 carbon atom(s) include trimethylamine and triethylamine. Examples of the alkanolamine include dimethylethanolamine, methyldiethanolamine, triethanolamine, and triisopropanolamine. Examples of the secondary amine include a heterocyclic amine. Examples of the heterocyclic amine include morpholine. These organic bases can be used alone or in combination of two or more.

Examples of the inorganic base include ammonia, alkali metal hydroxide, alkaline earth metal hydroxide, and alkali metal carbonate. Examples of the alkali metal hydroxide include lithium hydroxide, sodium hydroxide, and potassium hydroxide. Examples of the alkaline earth metal hydroxide include magnesium hydroxide and calcium hydroxide. Examples of the alkali metal carbonate include sodium carbonate and potassium carbonate. These inorganic bases can be used alone or in combination of two or more.

These neutralizing agents can be used alone or in combination of two or more. As the neutralizing agent, preferably, an organic base is used. More preferably, a tertiary amine is used. Even more preferably, trialkylamine is used. Particularly preferably, triethylamine is used.

The adding amount of the neutralizing agent with respect to 1 equivalent of the anionic group is, for example, 0.4 equivalents or more, preferably 0.6 equivalents or more. Further, the adding amount of the neutralizing agent with respect to 1 equivalent of the anionic group is, for example, 1.2 equivalents or less, preferably 1.0 equivalent or less.

Next, in this method, the isocyanate group-terminated prepolymer (a primary reaction product) is reacted with a chain extender to produce a polyurethane resin (a secondary reaction product).

For example, the isocyanate group-terminated prepolymer is reacted with the chain extender in water, thereby producing a polyurethane dispersion.

The chain extender is an organic compound having a plurality of active hydrogen groups and subjecting the isocyanate group-terminated prepolymer to a chain extension reaction. Examples of the chain extender include a polyamine and an amino alcohol.

Examples of the polyamine include an aromatic polyamine, an araliphatic polyamine, an alicyclic polyamine, an aliphatic polyamine, and a polyoxyethylene group-containing polyamine. Examples of the aromatic polyamine include 4,4'-diphenylmethanediamine and tolylenediamine. Examples of the araliphatic polyamine include 1,3-xylylene diamine and 1,4-xylylene diamine. Examples of the alicyclic polyamine include ethylenediamine, 3-aminomethyl-3,5,5-trimethylcyclohexylamine (also called: isophoronediamine), 4,4'-dicyclohexylmethanediamine, 2,5-bis(aminomethyl)bicyclo[2.2.1]heptane, 2,6-bis(aminomethyl)bicyclo[2.2.1]heptane, 1,4-cyclohexanediamine, 1-amino-3-aminomethyl-3,5,5-trimethylcyclohexane, bis-(4-aminocyclohexyl)methane, diaminocyclohexane, 3,9-bis(3-aminopropyl)-2,4,8,10-tetraoxaspiro[5,5]undecane, 1,3-bis(aminomethyl)cyclohexane, and 1,4-bis(aminomethyl)cyclohexane. Examples of the aliphatic polyamine include propylene diamine, 1,3-propane diamine, 1,4-butanediamine, 1,5-pentanediamine, 1,6-hexamethylenediamine, hydrazine, hydrazine hydrate, diethylenetriamine, triethylenetetramine, tetraethylenepentamine, 1,2-diaminoethane, 1,2-diaminopropane, and 1,3-diaminopentane. Examples of the polyoxyethylene group-containing polyamine include polyoxyalkylene etherdiamine. Examples of the polyoxyalkylene etherdiamine include polyoxyethylene etherdiamine. More specifically, examples thereof include PEG#1000 diamine (manufactured by NOF Corporation), Jeffamine ED-2003 (manufactured by Huntsman Inc.), Jeffamine EDR-148 (manufactured by Huntsman Inc.), and Jeffamine XTJ-512 (manufactured by Huntsman Inc.).

Examples of the amino alcohol include 2-((2-aminoethyl)amino) ethanol (also called: N-(2-aminoethyl) ethanolamine) and 2-((2-aminoethyl) amino)-1-methylpropanol (also called: N-(2-aminoethyl) isopropanolamine).

Examples of the chain extender further include an alkoxysilyl compound having a primary amino group. Examples of the alkoxysilyl compound having a primary amino group include γ-aminopropyltrimethoxysilane, γ-aminopropyltriethoxysilane, and N-phenyl-γ-aminopropyltrimethoxysilane.

Furthermore, examples of the chain extender include an alkoxysilyl compound having a primary amino group and a secondary amino group. Examples of the alkoxysilyl compound having a primary amino group and a secondary amino group include N-β (aminoethyl) γ-aminopropyltrimethoxysilane (also called: N-2-(aminoethyl)-3-aminopropyltrimethoxysilane), N-β (aminoethyl) γ-aminopropyltriethoxysilane (also called: N-2-(aminoethyl)-3-aminopropyltriethoxysilane), N-β (aminoethyl) γ-aminopropylmethyldimethoxysilane (also called: N-2-(aminoethyl)-3-aminopropylmethyldimethoxysilane), and N-β (aminoethyl) γ-aminopropylmethyldiethoxysilane (also called: N-2-(aminoethyl)-3-aminopropylmethyldiethoxysilane).

These chain extenders may be used alone or in combination of two or more. In terms of the gas barrier properties, as the chain extender, preferably, a polyamine and an amino alcohol are used. More preferably, ethylenediamine and 2-((2-aminoethyl) amino) ethanol are used.

Furthermore, in terms of improving the storage stability of the polyurethane dispersion, as the chain extender, even more preferably, ethylenediamine is used. That is to say, the chain extender preferably include ethylenediamine, more preferably consists of ethylenediamine.

In the chain extension reaction, for example, the isocyanate group-terminated prepolymer is reacted with the chain extender in water. More specifically, for example, the isocyanate group-terminated prepolymer is water-dispersed. Next, the chain extender is added to the water dispersion liquid of the isocyanate group-terminated prepolymer to extend the chain of the isocyanate group-terminated prepolymer by the chain extender. The method of water-dispersing the isocyanate group-terminated prepolymer is not especially limited. For example, while water is being stirred, the isocyanate group-terminated prepolymer is added to the water. In this case, with respect to 100 parts by mass of the isocyanate group-terminated prepolymer, the water is 100 to 1000 parts by mass.

Thereafter, while the water in which the isocyanate group-terminated prepolymer is water-dispersed is being stirred, the chain extender is added dropwise to the water. In this case, the equivalent ratio (active hydrogen group/isocyanate group) of the active hydrogen group of the chain extender to the isocyanate group of the isocyanate group-terminated prepolymer is, for example, 0.6 to 1.2. The chain extension reaction is completed, for example, at room temperature. The time until the completion of the reaction is, for example, 0.1 to 10 hours.

Furthermore, in this method, to adjust the solid content concentration, after the completion of the reaction, the organic solvent and/or water can be removed. Furthermore, in this method, to adjust the solid content concentration, after the completion of the reaction, water can be added. Furthermore, in this method, to adjust the solid content concentration, a solvent can be added. Examples of the solvent include water, methanol, ethanol, propanol, isopropanol, acetone, methyl ethyl ketone, ethyl acetate, tetrahydrofuran, acetonitrile, toluene, and xylene. These solvents can be used alone or in combination of two or more.

In this manner, a water-dispersed polyurethane resin is produced. That is to say, a polyurethane dispersion (PUD) including the polyurethane resin is produced.

The polyurethane dispersion has a pH of, for example, 5 or more, preferably 6 or more. Furthermore, the polyurethane dispersion has a pH of, for example, 11 or less, preferably 10 or less.

The polyurethane dispersion has an average particle size of, for example, 10 nm or more, preferably 20 nm or more, more preferably 50 nm or more. Furthermore, the polyurethane dispersion has an average particle size of, for example, 500 nm or less, preferably 300 nm or less, more preferably 200 nm or less.

The polyurethane dispersion has a solid content concentration of, for example, 10% by mass or more, preferably 15% by mass or more, more preferably 20% by mass or more. Furthermore, the polyurethane dispersion has a solid content concentration of, for example, 60% by mass or less, preferably 50% by mass or less, more preferably 40% by mass or less. The solid content concentration is appropriately adjusted by a known method.

Furthermore, the polyurethane dispersion can include an additive. Examples of the additive include a filler, a silane coupling agent, an alkoxysilane compound, a thickener, an antioxidant, a heat stabilizer, an ultraviolet absorber, a plasticizer, an antistatic agent, a lubricant, an anti-blocking agent, a surfactant, a dispersion stabilizer, a colorant, a pigment, a dye, a colloidal silica, an inorganic particle, an inorganic oxide particle, a layered inorganic compound, a leveling agent, a crystal nucleating agent, and a cross-linking agent. These additives can be used alone or in combination of two or more.

Hereinafter, a polyurethane dispersion including the polyurethane resin and not including an additive may be referred to as a primary polyurethane dispersion (primary PUD). Furthermore, a polyurethane dispersion including the polyurethane resin and an additive may be referred to as a secondary polyurethane dispersion (secondary PUD).

The secondary polyurethane dispersion contains an additive, preferably contains a cross-linking agent. Examples of the cross-linking agent include an epoxy cross-linking agent, a melamine cross-linking agent, a carbodiimide cross-linking agent, an aziridine cross-linking agent, an oxazoline cross-linking agent, an isocyanate cross-linking agent, and a reactive cross-linking agent. These can be used alone or in combination of two or more.

When the polyurethane resin contains a carboxy group as a hydrophilic group, an epoxy cross-linking agent, a carbodiimide cross-linking agent, and an isocyanate cross-linking agent are preferably used as the cross-linking agent.

The epoxy cross-linking agent is a compound having an epoxy group. Examples of the epoxy cross-linking agent include a known epoxy cross-linking agent. Preferably, an epoxy silane is used. When the secondary polyurethane dispersion contains an epoxy cross-linking agent, a barrier coat layer 4 having an excellent moist heat resistance is produced.

Examples of the epoxy silane include a silane coupling agent containing an epoxy group. More specifically, examples of the epoxy silane include 3-glycidoxypropyltrimethoxy silane, 3-glycidoxypropyltriethoxy silane, 3-glycidoxypropylmethyldimethoxysilane, 3-glycidoxypropylmethyldiethoxy silane, and 2-(3,4-epoxy cyclohexyl)ethyltrimethoxy silane. These can be used alone or in combination of two or more. As the epoxy silane, preferably, a trialkoxysilane is used, more preferably 3-glycidoxypropyltrimethoxy silane is used.

The epoxy silane is available as a commercially available product. More specifically, examples of the commercially available product include KBM-403 (glycidoxypropyltrimethoxy silane), KBE-403 (3-glycidoxypropyltriethoxy silane), KBM-402 (3-glycidoxypropylmethyldimethoxysilane), KBE-402 (3-glycidoxypropylmethyldiethoxy silane), and KBM-303 (2-(3,4-epoxy cyclohexyl)ethyltrimethoxy silane) (hereinabove, manufactured by Shin-Etsu Chemical Co., Ltd.). These can be used alone or in combination of two or more.

When the epoxy cross-linking agent (preferably, epoxy silane) is used, the adding amount of the epoxy cross-linking agent is appropriately set depending on the purpose and use. For example, when the polyurethane resin contains a carboxy group as a hydrophilic group, the epoxy group in the epoxy cross-linking agent with respect to 1.0 mol of the carboxy group in the polyurethane resin is, for example, 0.1 mol or more, preferably 0.3 mol or more, more preferably 0.5 mol or more, even more preferably 0.8 mol or more. Furthermore, the epoxy group in the epoxy cross-linking agent with respect to 1.0 mol of the carboxy group in the polyurethane resin is, for example, 5.0 mol or less, preferably 3.0 mol or less, more preferably 2.1 mol or less, even more preferably 1.5 mol or less, particularly preferably 1.2 mol or less.

Furthermore, with respect to 100 parts by mass of the total amount of the solid content of the secondary polyurethane dispersion, the epoxy cross-linking agent is, for example, 1.0 parts by mass or more, preferably 3.0 parts by mass or more, more preferably 5.0 parts by mass or more. Furthermore, with respect to 100 parts by mass of the total amount of the solid content, the epoxy cross-linking agent is, for example, 50.0 parts by mass or less, preferably 40.0 parts by mass or less, more preferably 30.0 parts by mass or less, even more preferably 20.0 parts by mass or less.

The carbodiimide cross-linking agent is a compound containing a carbodiimide group (a carbodiimide compound). When the secondary polyurethane dispersion contains a carbodiimide cross-linking agent, a barrier coat layer 4 having an excellent moist heat resistance is produced.

When the carbodiimide cross-linking agent (carbodiimide compound) is used, the adding amount of the carbodiimide cross-linking agent is appropriately set depending on the purpose and use. For example, when the polyurethane resin contains a carboxy group as a hydrophilic group, the carbodiimide group in the carbodiimide cross-linking agent with respect to 1.0 mol of the carboxy group in the polyurethane resin is, for example, 0.05 mol or more, preferably 0.1 mol or more, more preferably 0.3 mol or more, even more preferably 0.5 mol or more, even more preferably 0.7 mol or more, particularly preferably 0.9 mol or more. Furthermore, the carbodiimide group in the carbodiimide cross-linking agent with respect to 1.0 mol of the carboxy group in the polyurethane resin is, for example, 3.0 mol or less, preferably 2.0 mol or less, more preferably 1.5 mol or less, even more preferably 1.2 mol or less, particularly preferably 1.0 mol or less.

Furthermore, with respect to 100 parts by mass of the total amount of the solid content of the secondary polyurethane dispersion, the carbodiimide cross-linking agent is, for example, 1.0 parts by mass or more, preferably 5.0 parts by mass or more, more preferably 9.0 parts by mass or more, even more preferably 13.0 parts by mass or more, particularly preferably 16.0 parts by mass or more. Furthermore, with respect to 100 parts by mass of the total amount of the solid content, the carbodiimide cross-linking agent is, for example, 70.0 parts by mass or less, preferably 65.0 parts by mass or less, more preferably 47.0 parts by mass or less, even more preferably 45.0 parts by mass, even more preferably 38.0 parts by mass or less, particularly preferably 32.0 parts by mass or less.

The carbodiimide cross-linking agent is also available as a commercially available product. Examples of the commercially available product thereof include CARBODILITE V-02, CARBODILITE V-02-L2, CARBODILITE SV-02, CARBODILITE V-04, CARBODILITE V-10, CARBODILITE SW-12G, CARBODILITE E-02, CARBODILITE E-03A, and CARBODILITE E-05 (hereinabove, manufactured by Nisshinbo Chemical Inc.); Lupranate MM-103 and XTB-3003 (hereinabove, manufactured by BASF SE); and Stabaxol P (manufactured by Sumitomo Bayer Urethane Co., Ltd.); PICASSIAN XL-701, XL-702, XL-721, XL-725, XL-732, XL-752, XL-755, and XL-782 (hereinabove, manufactured by STAHL POLYMERS).

Examples of the isocyanate cross-linking agent include a known isocyanate cross-linking agent. Preferably, the water-dispersible polyisocyanate is used. When the secondary polyurethane dispersion contains an isocyanate cross-linking agent, a barrier coat layer 4 having an excellent moist heat resistance is produced.

The water-dispersible polyisocyanate is a polyisocyanate dispersible in water, and examples thereof include a polyisocyanate having an alkylene oxide group having 2 to 3 carbon atoms as a repeating unit. These can be used alone or in combination of two or more.

The water-dispersible polyisocyanate can be produced, for example, by dispersing a polyisocyanate containing a polyethylene oxide group in water by using a known dispersant (an ionic dispersant, a nonionic dispersant, etc.). These water-dispersible polyisocyanates can be used alone or in combination of two or more.

When the isocyanate cross-linking agent is used, the adding amount of the isocyanate cross-linking agent is appropriately set depending on the purpose and use. For example, when the polyurethane resin contains a carboxy group as a hydrophilic group, the isocyanate group in the isocyanate cross-linking agent with respect to 1.0 mol of the carboxy group in the polyurethane resin is, for example, 0.1 mol or more, preferably 0.5 mol or more, more preferably 0.8 mol or more, even more preferably 1.0 mol or more.

Furthermore, the isocyanate group in the isocyanate cross-linking agent with respect to 1.0 mol of the carboxy group in the polyurethane resin is, for example, 5.0 mol or less, preferably 4.0 mol or less, more preferably 3.0 mol or less, even more preferably 2.1 mol or less, particularly preferably 1.8 mol or less.

Furthermore, the isocyanate cross-linking agent with respect to 100 parts by mass of the total amount of the solid content of the secondary polyurethane dispersion is, for example, 1.0 parts by mass or more, preferably 3.0 parts by mass or more, more preferably 5.0 parts by mass or more. Furthermore, the isocyanate cross-linking agent with respect to 100 parts by mass of the total amount of the solid content is, for example, 50.0 parts by mass or less, preferably 40.0 parts by mass or less, more preferably 30.0 parts by mass or less, even more preferably 20.0 parts by mass or less.

The isocyanate cross-linking agent is also available as a commercially available product. Examples of the commercially available product thereof include TAKENATE WD-720, TAKENATE WD-725, TAKENATE WD-220, TAKENATE XWD-HS7, and TAKENATE XWD-HS30 (hereinabove, manufactured by Mitsui Chemicals, Inc,); AQUANATE 100, AQUANATE 110, AQUANATE 200, and AQUANATE 210 (hereinabove, manufactured by Nippon Polyurethane Industry Co., Ltd.); DURANATE WB40-100 and DURANATE WT20-100 (hereinabove, manufactured by Asahi Kasei Chemicals Corporation); Bayhydur 3100 and Bayhydur XP2487/1 (hereinabove, manufactured by Bayer Material Science AG); and Basonat HW100 and Basonat HA100 (hereinabove, manufactured by BASF SE).

In terms of improving the moist heat resistance, an epoxy silane, a water-dispersible polyisocyanate, and a carbodiimide compound are preferably used as the curing agent. In other words, the secondary polyurethane dispersion preferably contains at least one selected from the group consisting of an epoxy silane, a water-dispersible polyisocyanate, and a carbodiimide compound. When the secondary polyurethane dispersion contains these curing agents, a barrier coat layer 4 having an excellent moist heat resistance is produced.

In terms of improving the moist heat resistance, a carbodiimide compound is more preferably used as the curing agent. In other words, the secondary polyurethane dispersion more preferably contains a carbodiimide compound.

The secondary polyurethane dispersion has a solid content concentration of, for example, 10% by mass or more, preferably 15% by mass or more, more preferably 20% by mass or more. Furthermore, the secondary polyurethane dispersion has a solid content concentration of, for example, 60% by mass or less, preferably 50% by mass or less, more preferably 40% by mass or less. The solid content concentration is appropriately adjusted by a known method.

Furthermore, when the polyurethane resin contains a solvent-based polyurethane resin, preferably, a polyurethane resin solution is used in place of the polyurethane dispersion. The polyurethane resin solution is produced by dissolving the polyurethane resin into a solvent. Examples of the solvent include water, methanol, ethanol, propanol, isopropanol, acetone, methyl ethyl ketone, ethyl acetate, tetrahydrofuran, acetonitrile, toluene, and xylene. These solvents can be used alone or in combination of two or more. Furthermore, the polyurethane resin solution can contain the above-described additive in an appropriate ratio.

The polyurethane resin solution has a solid content concentration of, for example, 10% by mass or more, preferably 15% by mass or more, more preferably 20% by mass or more. Furthermore, the polyurethane resin solution has a solid content concentration of, for example, 60% by mass or less, preferably 50% by mass or less, more preferably 40% by mass or less. The solid content concentration is appropriately adjusted by a known method.

These polyurethane dispersion and polyurethane resin solution can be used alone or in combination of two or more. Preferably, a polyurethane dispersion is used.

Hereinafter, the method of forming a barrier coat layer 4 by using a polyurethane dispersion is described. However, when a polyurethane resin solution is used, a barrier coat layer 4 can be formed also by the same method.

In the formation of a barrier coat layer 4, the above-described polyurethane dispersion is applied onto the inorganic vapor deposition layer 3 and dried. The application method is not especially limited, and examples thereof include a dip coating method, a gravure coating method, a reverse coating method, a roll coating method, a bar coating method, a spray coating method, an air knife coating method, and an inline coating method.

The drying conditions are not especially limited. For example, the drying temperature is, for example, 40°C or more, preferably 50°C or more. Further, the drying temperature is, for example, 200°C or less, preferably 180°C or less. The drying time is, for example, 0.1 minutes or more, preferably 0.2 minutes or more. Further, the drying time is, for example, 10 minutes or less, preferably 5 minutes or less.

In this manner, the barrier coat layer 4 is formed on the inorganic vapor deposition layer 3. Furthermore, as necessary, the barrier coat layer 4 can be cured. The curing conditions are not especially limited, and are appropriately set depending on the purpose and use.

The barrier coat layer 4 has a dry mass of, for example, 0.1g/m² or more, preferably 0.2g/m² or more, more preferably 0.3g/m² or more. Furthermore, the barrier coat layer 4 has a dry mass of, for example, 10g/m² or less, preferably 7g/m² or less, more preferably 5g/m² or less, even more preferably 1.5g/m² or less, particularly preferably 0.8g/m² or less.

The moist heat resistance of the barrier coat layer 4 is evaluated according to the thermal expansion coefficient. The barrier coat layer 4 has a thermal expansion coefficient (in a temperature range of 40 to 120°C) of, for example, 200.0×10⁻⁵K⁻¹ or less, preferably 150.0×10⁻⁵K⁻¹ or less, more preferably 100.0×10⁻⁵K⁻¹ or less, even more preferably 50.0×10⁻⁵K⁻¹ or less, particularly preferably 10.0×10⁻⁵K⁻¹ or less. Furthermore, the thermal expansion coefficient (in a temperature range of 40 to 120°C) of the barrier coat layer 4 is normally 1.0×10⁻⁵K⁻¹ or more. The thermal expansion coefficient of the barrier coat layer 4 is measured using a film of the barrier coat layer 4 alone according to Examples described below.

As described above, a first film 11 including the substrate 2, the inorganic vapor deposition layer 3, and the barrier coat layer 4 in sequence is produced.

The first film 11 has a total thickness of, for example, 5 µm or more, preferably 10 µm or more. Furthermore, the first film 11 has a total thickness of, for example, 1mm or less, preferably 0.5mm or less.

### (2) Second Film 12

The second film 12 includes the resin film layer 6, preferably consists of the resin film layer 6. Examples of the resin film layer 6 include a substrate film and a sealant film. Examples of the substrate film include the plastic substrates described as the substrate 2 above. Examples of the sealant film include a resin film having heat sealing properties. Examples of the resin film having heat sealing properties include a polyethylene film and a cast polypropylene film.

The resin film layer 6 may be a single layer or a plurality of layers. Furthermore, the resin film layer 6 may be subjected to a surface treatment. Examples of the surface treatment include a corona discharge treatment and an anchor coat treatment. Examples of the shape of the resin film layer 6 include a sheet shape, a bottle shape, and a cup shape.

The second film 12 (resin film layer 6) has a thickness of, for example, 3 µm or more, preferably 5 µm or more. Furthermore, the second film 12 (resin film layer 6) has a thickness of, for example, 500 µm or less, preferably 200 µm or less.

### (3) Adhesive Layer 5

The adhesive layer 5 is a cured coating film of a two-component curable polyurethane adhesive including a main agent and a curing agent. More specifically, the two-component curable polyurethane adhesive is applied and cured by a method described below, thereby forming an adhesive layer 5.

The main agent contains, for example, an active hydrogen group-containing component. Examples of the active hydrogen group-containing component include a low molecular weight polyol and a high molecular weight polyol. Preferably, a high molecular weight polyol is used.

Examples of the high molecular weight polyol include the above-described high molecular weight polyols (the high molecular weight polyols described as a raw material of the polyurethane dispersion above). More specifically, examples of the high molecular weight polyol include a polyether polyol, a polyester polyol, a polycarbonate polyol, a polyurethane polyol, an epoxy polyol, a vegetable oil polyol, a polyolefin polyol, an acrylic polyol, and a vinyl monomer-modified polyol. These can be used alone or in combination of two or more.

In terms of improving the moist heat resistance by adjusting the content ratio of the ester group in the adhesive layer 5 to a range described below, a polyester polyol is preferably used as the high molecular weight polyol. The high molecular weight polyol more preferably consists of a polyester polyol.

Examples of the polyester polyol include a condensed polyester polyol and a ring-opening polyester polyol. Examples of the condensed polyester polyol include an adipate polyester polyol produced by a condensation reaction of a straight chain alcohol and adipic acid, and a terephthalate polyester polyol produced by a condensation reaction of a straight chain alcohol and terephthalic acid. Examples of the ring-opening polyester polyol include a lactone-based polyester polyol.

Furthermore, examples of the polyester polyol include an acid-modified polyester polyol. The acid-modified polyester polyol is produced, for example, by modifying a condensed polyester polyol and/or a ring-opening polyester polyol with acid by a known method. These can be used alone or in combination of two or more.

As the polyester polyol, preferably, a condensed polyester polyol and an acid-modified polyester polyol are used, more preferably an acid-modified polyester polyol produced by modifying a condensed polyester polyol with acid is used.

The high molecular weight polyol has a number average molecular weight of, for example, 650 or more, preferably 1000 or more, more preferably 2000 or more. The high molecular weight polyol has a number average molecular weight of, for example, 20000 or less, preferably 10000 or less, more preferably 8000 or less.

Furthermore, as necessary, the main agent can contain a known organic solvent. When the main agent contains an organic solvent, the solid content concentration of the main agent is appropriately set depending on the purpose and use.

The curing agent contains a polyisocyanate compound. Examples of the polyisocyanate compound include an aromatic polyisocyanate, an araliphatic polyisocyanate, and an aliphatic polyisocyanate.

Examples of the aromatic polyisocyanate include an aromatic polyisocyanate monomer and an aromatic polyisocyanate derivative. Examples of the aromatic diisocyanate monomer include an aromatic diisocyanate. Examples of the aromatic diisocyanate include tolylene diisocyanate (TDI), naphthalene diisocyanate (NDI), and diphenylmethane diisocyanate (MDI). Examples of the aromatic polyisocyanate derivative include a modified product produced by modifying an aromatic polyisocyanate monomer by a known method. More specifically, examples of the modified product include a multimer, an allophanate-modified product, a polyol modified product, a biuret-modified product, a urea-modified product, an oxadiazinetrione-modified product, and a carbodiimide-modified product. These can be used alone or in combination of two or more.

Examples of the araliphatic polyisocyanate include an araliphatic polyisocyanate monomer and an araliphatic polyisocyanate derivative. Examples of the araliphatic polyisocyanate monomer include an araliphatic diisocyanate. Examples of the araliphatic diisocyanate include xylylene diisocyanate (XDI) and tetramethylxylylene diisocyanate (TMXDI). Examples of the araliphatic polyisocyanate derivative include the above-described modified products of an araliphatic polyisocyanate monomer. These can be used alone or in combination of two or more.

Examples of the aliphatic polyisocyanate include a chain aliphatic polyisocyanate and an alicyclic polyisocyanate.

Examples of the chain aliphatic polyisocyanate include a chain aliphatic polyisocyanate monomer and a chain aliphatic polyisocyanate derivative. Examples of the chain aliphatic polyisocyanate monomer include a chain aliphatic diisocyanate. Examples of the chain aliphatic diisocyanate include ethylene diisocyanate, butylene diisocyanate, 1,5-pentamethylene diisocyanate (PDI), and 1,6-hexamethylene diisocyanate (HDI). Examples of the chain aliphatic polyisocyanate derivative include the above-described modified products of a chain aliphatic polyisocyanate monomer. These can be used alone or in combination of two or more.

Examples of the alicyclic polyisocyanate include an alicyclic polyisocyanate monomer and an alicyclic polyisocyanate derivative. Examples of the alicyclic polyisocyanate monomer include an alicyclic diisocyanate. Examples of the alicyclic diisocyanate include bis(isocyanatomethyl)cyclohexane (H₆XDI), methylenebis(cyclohexyl isocyanate) (H₁₂MDI), isophorone diisocyanate (IPDI), and norbornane diisocyanate (NBDI). Examples of the alicyclic polyisocyanate derivative include the above-described modified products of an alicyclic polyisocyanate monomer. These can be used alone or in combination of two or more.

These polyisocyanate compounds can be used alone or in combination of two or more. As the polyisocyanate compound, preferably, an aromatic polyisocyanate derivative, an araliphatic polyisocyanate derivative, and an aliphatic polyisocyanate derivative are used. Even more preferably, an araliphatic polyisocyanate derivative and an aliphatic polyisocyanate derivative are used.

In other words, the curing agent even more preferably contains an araliphatic polyisocyanate derivative and/or an aliphatic polyisocyanate derivative. As the derivative, preferably, a multimer, an allophanate-modified product, and a polyol modified product are used, more preferably, a polyol modified product is used. Examples of the polyol modified product include a low molecular weight polyol adduct. Preferably, a trimethylol propane adduct is used.

In terms of the heat resistance of the adhesive layer 5, even more preferably, the curing agent contains both of an araliphatic polyisocyanate derivative and an aliphatic polyisocyanate derivative. Even more preferably, the curing agent contains both of an araliphatic polyisocyanate derivative and an alicyclic polyisocyanate derivative. Particularly preferably, the curing agent consists of an araliphatic polyisocyanate derivative and an alicyclic polyisocyanate derivative. In such a case, the ratio of the araliphatic polyisocyanate derivative to the aliphatic polyisocyanate derivative (including an alicyclic polyisocyanate derivative) is appropriately set depending on the purpose and use.

Furthermore, as necessary, the curing agent can contain a known organic solvent. When the curing agent contains an organic solvent, the solid content concentration of the curing agent is appropriately set depending on the purpose and use.

The two-component curing agent polyurethane adhesive can contain an additive in an appropriate ratio. Examples of the additive include a filler, a silane coupling agent, an alkoxysilane compound, a thickener, an antioxidant, a heat stabilizer, a ultraviolet absorber, a plasticizer, an antistatic agent, a lubricant, an anti-blocking agent, a surfactant, a dispersion stabilizer, a colorant, a pigment, a dye, a colloidal silica, an inorganic particle, an inorganic oxide particle, a layered inorganic compound, a leveling agent, and a crystal nucleating agent. These additives can be used alone or in combination of two or more. As the additive, preferably, a silane coupling agent is used.

Examples of the silane coupling agent include an amino group-containing silane coupling agent, an epoxy group-containing silane coupling agent, and an isocyanate group-containing silane coupling agent. Examples of the amino group-containing silane coupling agent include N-β-(aminoethyl)-γ-aminopropyltrimethoxysilane, 3-aminopropyltriethoxysilane, N-β-(aminoethyl)-γ-propylmethyldimethoxysilane, n-(dimethoxymethyl silylpropyl)ethylenediamine, n-(triethoxy silylpropyl)ethylenediamine, and N-phenyl-γ-aminopropyltrimethoxysilane. Examples of the epoxy group-containing silane coupling agent include γ-glycidoxypropyltrimethoxy silane, γ-glycidoxypropyltriethoxy silane, β-(3,4-epoxy cyclohexyl)ethyltrimethoxy silane, and di(y-glycidoxypropyl)dimethoxy silane. Examples of the isocyanate group-containing silane coupling agent include 3-isocyanate propyl trimethoxy silane and 3-isocyanate propyltriethoxy silane. These can be used alone or in combination of two or more. As the silane coupling agent, preferably, an amino group-containing silane coupling agent and an epoxy group-containing silane coupling agent are used, more preferably, an epoxy group-containing silane coupling agent is used.

The silane coupling agent may be added to the main agent or may be added to the curing agent. Furthermore, the silane coupling agent may be added to both of the main agent and the curing agent.

Furthermore, the silane coupling agent may be added when the main agent and the curing agent are blended (as described below). The blending ratio of the silane coupling agent is not especially limited, and is appropriately set depending on the purpose and use.

Furthermore, the silane coupling agent may be covalently bonded with the main agent and/or the curing agent. When the silane coupling agent is covalently bonded with the main agent and/or the curing agent, for example, the method described in PCT International Publication No. 2020/203473 is employed. In such a case, for example, a trace of a polyisocyanate compound may be added together with the silane coupling agent to the main agent. That is to say, the main agent may be modified with polyurethane. Furthermore, a trace of a low molecular weight polyol and/or a high molecular weight polyol may be added together with the silane coupling agent to the curing agent. That is to say, the curing agent is modified with polyurethane.

In the two-component curable polyurethane adhesive, the above-described main agent and the above-described curing agent are separately prepared, and blended together when being used. The ratio of the main agent to the curing agent is appropriately set depending on the purpose and use. For example, the equivalent ratio (isocyanate group/active hydrogen group) of the isocyanate group of the curing agent to the active hydrogen group of the main agent is, for example, 0.5 or more, preferably 0.6 or more. Furthermore, the equivalent ratio (isocyanate group/active hydrogen group) of the isocyanate group of the curing agent to the active hydrogen group of the main agent is, for example, 5 or less, preferably 3 or less.

Furthermore, as necessary, the two-component curable polyurethane adhesive can contain a known organic solvent. The organic solvent may be blended in the curing agent and/or the main agent, or may separately be blended when the curing agent and the main agent are mixed together.

In the two-component curable polyurethane adhesive, the content ratio of the organic solvent is appropriately set so that the solid content concentration (resin concentration) when the curing agent and the main agent are mixed together becomes an appropriate ratio. In terms of the coating workability, the solid content concentration when the curing agent and the main agent are mixed is, for example, 5% by mass or more, preferably 10% by mass or more, more preferably 20% by mass or more. Furthermore, the solid content concentration when the curing agent and the main agent are mixed is, for example, 50% by mass or less, preferably 40% by mass or less, more preferably 30% by mass or less.

Then, the adhesive layer 5 is formed as a cured coating film of the above-described two-component curable polyurethane adhesive. The adhesive layer 5 has a dry mass of, for example, 0.5g/m² or more, preferably 1g/m² or more, more preferably 1.5g/m² or more. Furthermore, the adhesive layer 5 has a dry mass of, for example, 5g/m² or less, preferably 4.5g/m² or less.

The moist heat resistance of the adhesive layer 5 is evaluated according to the thermal expansion coefficient. The adhesive layer 5 has a thermal expansion coefficient (in a temperature range of 40 to 135°C) of, 100.0×10⁻⁵K⁻¹ or less, preferably less than 95.0×10⁻⁵K⁻¹, more preferably 90.0×10⁻⁵K⁻¹ or less, even more preferably 80.0×10⁻⁵K⁻¹ or less, even more preferably 70.0×10⁻⁵K⁻¹ or less, particularly preferably 60.0×10⁻⁵K⁻¹ or less. Furthermore, the adhesive layer 5 has a thermal expansion coefficient (in a temperature range of 40 to 135°C) of, for example, 1.0×10⁻⁵K⁻¹ or more, preferably 5.0×10⁻⁵K⁻¹ or more, more preferably 10.0×10⁻⁵K⁻¹ or more, even more preferably 30.0×10⁻⁵K⁻¹ or more. The thermal expansion coefficient of the adhesive layer 5 is measured using a film of the adhesive layer 5 alone according to Examples described below.

Furthermore, the moist heat resistance of the adhesive layer 5 can also be evaluated according to the elongation percentage. That is to say, the lower the elongation percentage is, the more the thermal expansion can be suppressed. The adhesive layer 5 has an elongation percentage of, for example, 500% or less, preferably 450% or less, more preferably 400% or less, even more preferably 380% or less. Furthermore, the adhesive layer 5 has an elongation percentage of, for example, 100% or more. The elongation percentage of the adhesive layer 5 is measured using a film of the adhesive layer 5 alone according to Examples described below.

In terms of the moist heat resistance, the adhesive layer 5 has a glass transition temperature of, for example, 20°C or more, preferably 23°C or more, more preferably 25°C or more, even more preferably 30°C or more.

Furthermore, the adhesive layer 5 has a glass transition temperature of, for example, 100°C or less, preferably 80°C or less, more preferably 60°C or less, even more preferably 40°C or less. The glass transition temperature of the adhesive layer 5 is measured according to Examples described below.

Furthermore, the adhesive layer 5 preferably contains an ester group. More specifically, the main agent of the two-component curable polyurethane adhesive preferably contains a polyester polyol. Therefore, the adhesive layer 5 (the cured coating film of the two-component curable polyurethane adhesive) preferably contains an ester group derived from the polyester polyol.

In such a case, the content ratio of the ester group in the adhesive layer 5 to the adhesive layer 5 (the solid content) is, for example, 7.00 mmol/g or more, preferably 7.20 mmol/g or more, more preferably 7.40 mmol/g or more, even more preferably 7.60 mmol/g or more, particularly preferably 7.70 mmol/g or more. Furthermore, the content ratio of the ester group to the adhesive layer 5 is, for example, 15.0 mmol/g or less, preferably 10.0 mmol/g or less, more preferably 9.00 mmol/g or less, even more preferably 8.50 mmol/g or less, particularly preferably 8.00 mmol/g or less.

The content ratio of the ester group in the adhesive layer 5 is the percentage of the ester group (-COO-) content to the total amount of the solid content of the main agent and the curing agent, and calculated based on the compositions and blending formulations of the main agent and the curing agent.

### (4) Laminate 1

The laminate 1 is produced by adhering the above-described first film 11 to the second film 12 by the two-component curable polyurethane adhesive. More specifically, in this method, first, the curing agent and the main agent of the two-component curable polyurethane adhesive are mixed together. Next, the mixture of the main agent and the curing agent is applied onto a surface of one of the first film 11 (barrier coat layer 4) and the second film 12 (resin film layer 6). In this manner, the coating layer of the two-component curable polyurethane adhesive is produced.

Thereafter, the other of the above-described first film 11 and second film 12 (the other relative to the above-described one) is adhered to the coating layer of the two-component curable polyurethane adhesive. In this method, for example, a known lamination device is used. Examples of the lamination device include a forward transfer application device and a reverse transfer application device (reverse coater).

Thereafter, the coating layer of the two-component curable polyurethane adhesive is heated as necessary, and furthermore is cured as necessary. In this manner, the coating layer of the two-component curable polyurethane adhesive is cured, thereby forming the adhesive layer 5. In other words, the adhesive layer 5 is interposed between the barrier coat layer 4 and the resin film layer 6. The heating conditions and the curing conditions are not especially limited, and are appropriately set depending on the purpose and use.

As described above, a laminate 1 including the substrate 2, the inorganic vapor deposition layer 3, the barrier coat layer 4, the adhesive layer 5, and the resin film layer 6 in sequence is produced.

The laminate 1 has a total thickness of, for example, 5 µm or more, preferably 10 µm or more. Furthermore, the laminate 1 has a total thickness of, for example, 1mm or less, preferably 0.5mm or less.

In the above-described laminate 1, the barrier coat layer 4 is interposed between the inorganic vapor deposition layer 3 and the adhesive layer 5. In addition, the adhesive layer 5 has a thermal expansion coefficient of a predetermined value or less. Therefore, the above-described laminate 1 has an excellent moist heat resistance.

In particular, in the above-described laminate 1, the above-described barrier coat layer 4 and the above-described adhesive layer 5 are laminated so as to be in contact. In such a case, the stress from the substrate 2 to the inorganic vapor deposition layer 3, which is generated by the change in temperature, is relaxed by the barrier coat layer 4 and adhesive layer 5 laminated thereon. Thus, the adhesive properties and the barrier properties can be maintained. Therefore, in the above-described laminate 1, an excellent moist heat resistance is achieved by the synergistic effect of the barrier coat layer 4 and the adhesive layer 5.

The above-described laminate 1 is preferably used as a packaging material in various industrial fields. Examples of the packaging material include a food packaging film, a medicinal product packaging film, a food packaging container, an optical film, and an industrial film. In particular, the laminate 1 has an excellent heat resistance and thus is preferably used as a food packaging film for a high-temperature sterilization treatment and as a food packaging film for heat cooking.

### 2. Second Embodiment

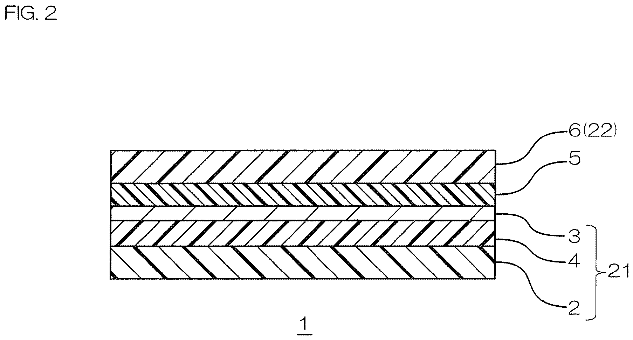

In FIG. 2, the laminate 1 includes the substrate 2, the inorganic vapor deposition layer 3, the adhesive layer 5, and the resin film layer 6 in sequence. Furthermore, the barrier coat layer 4 is interposed between the substrate 2 and the inorganic vapor deposition layer 3.

That is to say, in FIG. 2, along the thickness direction of the laminate 1, the substrate 2, the barrier coat layer 4, the inorganic vapor deposition layer 3, the adhesive layer 5, and the resin film layer 6 are laminated in sequence.

More specifically, the laminate 1 is formed by adhering the first film 21 including the substrate 2, the barrier coat layer 4, and the inorganic vapor deposition layer 3 to the second film 22 including the resin film layer 6 through the adhesive layer 5. The first film 21, the second film 22, and the adhesive layer 5 are detailed below.

### (1) First Film 21

The first film 21 includes the above-described substrate 2, the above-described barrier coat layer 4, the above-described inorganic vapor deposition layer 3 in sequence along the thickness direction of the first film 21. That is to say, the first film 21 includes the substrate 2, the barrier coat layer 4 laminated and disposed on the one surface of the substrate 2, and the inorganic vapor deposition layer 3 laminated and disposed on one surface of the barrier coat layer 4.

More specifically, in the embodiment, the barrier coat layer 4 is disposed on the one surface of the substrate 2 so as to be in contact with the substrate 2. Furthermore, in this embodiment, the inorganic vapor deposition layer 3 is disposed on the one surface of the barrier coat layer 4 so as to be in contact with the barrier coat layer 4. In other words, in FIG. 2, the barrier coat layer 4 is an undercoat layer of the inorganic vapor deposition layer 3.

As the substrate 2, for example, the above-described substrate 2 is used, preferably the above-described plastic substrate is used.

As the barrier coat layer 4, for example, the above-described barrier coat layer 4 is used, more specifically, a dried coating film of the above-described polyurethane dispersion is used. That is to say, the barrier coat layer 4 is formed as a dried coating film by applying the above-described polyurethane dispersion onto the one surface of the substrate 2 and drying the above-described polyurethane dispersion under the above-described conditions.

As the inorganic vapor deposition layer 3, the above-described inorganic vapor deposition layer 3 is used, more specifically, the inorganic vapor deposition layer 3 is formed by vapor depositing the above-described inorganic material on the one surface of the barrier coat layer 4. In this manner, the barrier coat layer 4 is interposed between the substrate 2 and the inorganic vapor deposition layer 3.

The first film 21 has a total thickness of, for example, 5 µm or more, preferably 10 µm or more. Furthermore, the first film 21 has a total thickness of, for example, 1mm or less, preferably 0.5mm or less.

### (2) Second Film 22

The second film 22 includes the above-described resin film layer 6, preferably consists of the above-described resin film layer 6. As the resin film layer 6, more specifically, the above-described substrate and sealant film are used.

The second film 22 (resin film layer 6) has a thickness of, for example, 3 µm or more, preferably 5 µm or more. Furthermore, the second film 22 (resin film layer 6) has a thickness of, for example, 500 µm or less, preferably 200 µm or less.

### (3) Adhesive Layer 5

The adhesive layer 5 is a cured coating film of the above-described two-component curable polyurethane adhesive. More specifically, the adhesive layer 5 is formed by applying and curing the above-described two-component curable polyurethane adhesive by the above-described method.

The adhesive layer 5 has a dry mass of, for example, 0.5g/m² or more, preferably 1g/m² or more, more preferably 1.5g/m² or more. Furthermore, the adhesive layer 5 has a dry mass of, for example, 5g/m² or less, preferably 4.5g/m² or less.

### (4) Laminate 1

The laminate 1 is produced by adhering the above-described first film 11 to the second film 12 by the two-component curable polyurethane adhesive. In this method, first, the curing agent and the main agent of the two-component curable polyurethane adhesive are mixed together. Next, the mixture of the main agent and the curing agent is applied onto a surface of one of the first film 11 (inorganic vapor deposition layer 3) and the second film 12 (resin film layer 6). In this manner, a coating layer of the two-component curable polyurethane adhesive is produced.

Thereafter, the other of the above-described first film 11 and the second film 12 (the other relative to the above-described one) is adhered to the coating layer of the two-component curable polyurethane adhesive by a known method.

Thereafter, the coating layer is heated as necessary to cure the two-component curable polyurethane adhesive. In this manner, the adhesive layer 5 is formed as a cured product of the coating layer of the two-component curable polyurethane adhesive. In other words, the adhesive layer 5 is interposed between the inorganic vapor deposition layer 3 and the resin film layer 6. The heating conditions and the curing conditions are not especially limited, and are appropriately set depending on the purpose and use.

As described above, a laminate 1 including the substrate 2, the barrier coat layer 4, the inorganic vapor deposition layer 3, the adhesive layer 5, and the resin film layer 6 in sequence is produced.

The laminate 1 has a total thickness of, for example, 5 µm or more, preferably 10 µm or more. Furthermore, the laminate 1 has a total thickness of, for example, 1 mm or less, preferably 0.5 mm or less.

In the above-described laminate 1, the barrier coat layer 4 is interposed between the substrate 2 and the inorganic vapor deposition layer 3. Furthermore, the adhesive layer 5 has a thermal expansion coefficient less than a predetermined value. Therefore, the above-described laminate 1 has an excellent moist heat resistance.

In particular, in the above-described laminate 1, the above-described barrier coat layer 4 and the above-described adhesive layer 5 are laminated through the inorganic vapor deposition layer 3. In such a case, the stress from the substrate 2 to the inorganic vapor deposition layer 3, which is generated by the change in temperature, can be relaxed from both sides, by the barrier coat layer 4 laminated therebetween and the adhesive layer 5 laminated on the inorganic vapor deposition layer 3. Thus, the adhesive properties and the barrier properties can be maintained. Therefore, in the above-described laminate 1, an excellent moist heat resistance is achieved by the synergistic effect of the barrier coat layer 4 and the adhesive layer 5.

The above-described laminate 1 is preferably used as a packaging material in the same manner as the laminate 1 of the first embodiment in various industrial fields. Examples of the packaging material include a food packaging film, a medicinal product packaging film, a food packaging container, an optical film, and an industrial film. In particular, the laminate 1 has an excellent heat resistance, and thus is preferably used as a food packaging film for a high-temperature sterilization treatment and as a food packaging film for heat cooking.

### 3. Third Embodiment

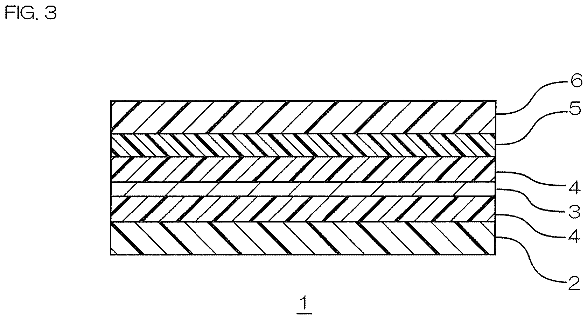

The laminate 1 can include a plurality of barrier coat layers 4. For example, in FIG. 3, the laminate 1 includes the substrate 2, the inorganic vapor deposition layer 3, the adhesive layer 5, and the resin film layer 6 in sequence, and further includes a plurality of (two) barrier coat layers 4. More specifically, the first barrier coat layer 4 is interposed between the substrate 2 and the inorganic vapor deposition layer 3. Furthermore, the second barrier coat layer 4 is interposed between the inorganic vapor deposition layer 3 and the adhesive layer 4. The laminate 1 described above achieves an particularly excellent moist heat resistance.

More specifically, the above-described barrier coat layer 4 and the above-described adhesive layer 5 are laminated in the above-described laminate 1 so as to be in contact. In such a case, the stress from the substrate 2 to the inorganic vapor deposition layer 3, which is generated by the change in temperature, is relaxed by the barrier coat layer 4 and adhesive layer 5 laminated thereon. Thus, the adhesive properties and the barrier properties can be maintained. Therefore, in the above-described laminate 1, an excellent moist heat resistance is achieved by the synergistic effect of the barrier coat layer 4 and the adhesive layer 5.

Furthermore, the above-described barrier coat layer 4 and the above-described adhesive layer 5 are laminated in the above-described laminate 1 through the inorganic vapor deposition layer 3. In such a case, the stress from the substrate 2 to the inorganic vapor deposition layer 3, which is generated by the change in temperature, is relaxed from both sides, by the barrier coat layer 4 laminated therebetween and the adhesive layer 5 laminated on the inorganic vapor deposition layer 3. Thus, the adhesive properties and the barrier properties can be maintained. Therefore, in the above-described laminate 1, an excellent moist heat resistance is achieved by the synergistic effect of the barrier coat layer 4 and the adhesive layer 5.

The above-described laminate 1 is preferably used as a packaging material in the same manner as the laminate 1 of the first embodiment in various industrial fields. Examples of the packaging material include a food packaging film, a medicinal product packaging film, a food packaging container, an optical film, and an industrial film. In particular, the laminate 1 has an excellent heat resistance, and thus is preferably used as a food packaging film for a high-temperature sterilization treatment and as a food packaging film for heat cooking.

### Examples

Next, the present invention is described based on Examples and Comparative Examples. The present invention is, however, not limited to Examples below. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

### 1. Vapor Deposition Film (Substrate and Inorganic Vapor Deposition Layer)

### (1) Alumina-vapor deposited PET

A commercially available alumina-vapor deposited polyethylene terephthalate film (alumina-vapor deposited PET, TL-PET-H, manufactured by Mitsui Chemicals Tohcello, Inc.) was prepared.

### (2) Alumina-vapor deposited OPP

An aluminum oxide was vapor-deposited (under vacuum conditions of 1×10⁻⁴Pa, RH method) on one surface of a biaxially oriented polypropylene film (PYLEN film-OT P2171, a thickness of 20 µm, manufactured by TOYOBO CO., LTD.) by using a vacuum vapor deposition apparatus (manufactured by ULVAC, Inc.), thereby forming an inorganic vapor deposition layer having a thickness of 10 nm. In this manner, an alumina-vapor deposited biaxially oriented polypropylene film (alumina-vapor deposited OPP) was prepared.

### (3) Silica-vapor Deposited PET

A silicon oxide was vapor-deposited (under vacuum conditions of 1×10⁻⁴Pa, RH method) on one surface of a biaxially oriented polyester film (trade name: TOYOBO ester film E5102, manufactured by TOYOBO CO., LTD., a thickness of 12 µm) by using a vacuum vapor deposition apparatus (manufactured by ULVAC, Inc.), thereby forming an inorganic vapor deposition layer having a thickness of 20 nm. In this manner, a silica-vapor deposited biaxially oriented polyester film (silica-vapor deposited PET) was prepared.

### (4) Silica-vapor Deposited OPP

A silicon oxide was vapor-deposited (under vacuum conditions of 1×10⁻⁴Pa, RH method) on one surface of a biaxially oriented polypropylene film (PYLEN film-OT P2171, a thickness of 20 µm, manufactured by TOYOBO CO., LTD.) by using a vacuum vapor deposition apparatus (manufactured by ULVAC, Inc.), thereby forming an inorganic vapor deposition layer having a thickness of 20 nm. In this manner, a silica-vapor deposited biaxially oriented polypropylene film (silica-vapor deposited OPP) was prepared.

### 2. Barrier Coat Layer

### (1) Primary Polyurethane Dispersion (Primary PUD)

A water dispersion liquid (PUD) of an aqueous polyurethane resin was prepared by a method described below.

### Preparation Example 1 (Primary PUD 1)

The following raw material components were reacted under a nitrogen atmosphere at 65 to 70°C until the isocyanate group concentration (NCO%) became 9.53% by mass or less. In this manner, a reaction solution containing an isocyanate group-terminated prepolymer was produced.

### Raw Material Component

1,3-xylylene diisocyanate
(TAKENATE 500, 1,3-XDI, manufactured by Mitsui Chemicals Inc.) 148.2 parts by mass
Methylenebis(cyclohexyl isocyanate)
(Vestanat H₁₂MDI, H₁₂MDI, manufactured by Evonik Industries AG) 25.8 parts by mass
Ethylene glycol 29.9 parts by mass
Trimethylol propane 2.3 parts by mass
Dimethylol propionic acid 17.0 parts by mass
Methyl ethyl ketone (solvent) 126.9 parts by mass

Next, the reaction solution was cooled to 40°C. Next, 12.6 parts by mass of triethylamine was added to the reaction solution to neutralize the isocyanate group-terminated prepolymer. Next, the reaction solution was dispersed in 1050.0 parts by mass of ion-exchange water with a homodisper. Next, an amine aqueous solution was added to the produced dispersion solution to cause a chain extension reaction. Thereafter, the mixture was aged for 1 hour. The amine aqueous solution was a mixture of 50.0 parts by mass of ion-exchange water and 24.8 parts by mass of 2-(2-aminoethylamino)ethanol. Thereafter, the methyl ethyl ketone and ion-exchange water were distilled off with an evaporator. In this manner, the solid content concentration was adjusted to 30% by mass.

In this manner, a primary polyurethane dispersion (primary PUD 1) containing the polyurethane resin was produced.

### Preparation Example 2 (Primary PUD 2)

In accordance with the formulations shown in Table 1, in the same manner as Preparation Example 1, a primary polyurethane dispersion (PUD 2) was produced.

### (2) Polyurethane Resin Solution (PU)

A solvent-based polyurethane resin solution (PU) was prepared by a method described below.

### Preparation Example 3 (PU 3)

1.9 parts by mass of acrylic acid, 35.0 parts by mass of styrene, 42.1 parts by mass of methyl methacrylate, 1.0 parts by mass of n-butyl acrylate, and 20.0 parts by mass of 2-hydroxyethyl acrylate were dispersed in ethyl acetate. Furthermore, 1.0 parts by mass of AIBN was added as a polymerization initiator to the above-described ethyl acetate. Then, these were reacted at 60°C for 10 hours. In this manner, an acrylic polyol (polyol compound) was produced.

Next, ethyl acetate was added to the above-described acrylic polyol. In this manner, an ethyl acetate solution of an acrylic polyol with a solid content concentration of 50% (hereinafter, acrylic polyol solution) was produced. The glass transition temperature (Tg) of the acrylic polyol was calculated according to the formulation of the monomer and the FOX equation. As a result, the glass transition temperature was 63.7°C. Furthermore, the number average molecular weight (Mn) of the acrylic polyol was measured as a molecular weight in terms of standard polystyrene by gel permeation chromatography. As a result, the number average molecular weight was 15000.

Next, 7.0g of the produced acrylic polyol solution (a solid content concentration of 50%) and 84.0g of the ethyl acetate were mixed together. Furthermore, 9.0g of TAKENATE D-110N (manufactured by Mitsui Chemicals Inc., trimethylol propane adduct of XDI (isocyanate compound), a solid content concentration of 75%, an ethyl acetate solution (polyisocyanate component)) was mixed to the acrylic polyol solution to cause a urethane-forming reaction. In this manner, a polyacrylic urethane resin solution (PU 3) was produced.

### Preparation Example 4 (PU 4)

26.9 parts by mass of TAKENATE D-110N (TMP adduct of XDI, an isocyanate group content of 11.5% by mass, a solid content of 75% by mass, a solvent: ethyl acetate, manufactured by Mitsui Chemicals Inc.), 70.0 parts by mass of ethyl acetate, 2.1 parts by mass of ethylene glycol, and 1.0 part by mass of ethanol were mixed together. In this manner, a polyurethane resin solution (PU 4) with a solid content concentration of 30% by mass was produced.

### 3. Adhesive Layer

### (1) Main Agent

Preparation Example A1 (Main Agent A-1)
568g of isophthalic acid, 142g of terephthalic acid, 205g of ethylene glycol, 306g of neopentyl glycol, 234g of 1,6-hexane diol, and 0.29g of zinc acetate were subjected to an ester-forming reaction under a nitrogen stream at 180 to 220°C.

After a predetermined amount of water was distilled off, 48.9g of dimer acid and 250g of adipic acid were added to the above-described reaction product, and the ester-forming reaction was further continued under a nitrogen stream at 180 to 220°C.

Next, the inside of the system was gradually depressurized and the reaction was carried out at 220 to 230°C for 6 hours. Thereafter, 6.83g of trimellitic anhydride was added to the above-described reaction product to cause a reaction (acid modification) at 140 to 150°C.

In this manner, a polyol A was produced. The total amount of the polyol A was dissolved in ethyl acetate, thereby producing a solution with a solid content of 60%.

The above-described polyol A, an 85% solution of phosphoric acid, an amino group-containing silane coupling agent (3-aminopropyltriethoxy silane, KBE-903, manufactured by Shin-Etsu Chemical Co., Ltd.), and isophorone diisocyanate (IPDI) were mixed together. In this manner, a main agent A-1 was produced.

The amount of the 85% solution of phosphoric acid was 0.012 parts with respect to 100 parts by mass of the solid content of the polyol A. Furthermore, the amount of the amino group-containing silane coupling agent was 0.60 parts by mass with respect to 100 parts by mass of the polyol A. Furthermore, the amount of the IPDI was 0.30 parts by mass with respect to 100 parts by mass of the polyol A.

### Preparation Example A2 (Main AgentA-2)

The above-described polyol A, a 85% solution of phosphoric acid, and an epoxy group-containing silane coupling agent (γ-glycidoxypropyltrimethoxy silane, KBM-403, manufactured by Shin-Etsu Chemical Co., Ltd.) were mixed together. In this manner, a main agent A-2 was produced.

The amount of the 85% solution of phosphoric acid was 0.012 parts with respect to100 parts by mass of the solid content of the polyol A. Furthermore, the amount of an amino group-containing silane coupling agent was 0.50 parts by mass with respect to 100 parts by mass of the polyol A.

### Preparation Example A3 (Main AgentA-3)

228.9g of isophthalic acid, 46.4g of an ethylene glycol, and 263.3g of a neopentyl glycol were subjected to an ester-forming reaction under a nitrogen stream at 180 to 220°C.

After a predetermined amount of water was distilled off, 278.7g of sebacic acid was added to the above-described reaction product and the ester-forming reaction was further continued at 180 to 220°C.

In this manner, a polyol B was produced. The total amount of the polyol B was dissolved in ethyl acetate, thereby producing a solution with a solid content of 70%.

645.6g of the above-described polyol B and 31.4g of methyl-1,3-phenylene diisocyanate (1,3-tolylene diisocyanate) were subjected to a urethane-forming reaction under a nitrogen atmosphere at 77 to 80°C for 3 hours.

0.13g of tin octylate was added to the above-described reaction product, and the urethane-forming reaction was further continued for 3 hours. 6.89g of diethylene glycol was added to the above-described reaction product, and the urethane-forming reaction was further carried out for 2 hours.

Next, the above-described reaction product was cooled to 70°C. Thereafter, 310.7g of ethyl acetate and 4.5g of an epoxy group-containing silane coupling agent (γ-glycidoxypropyltrimethoxy silane, KBM-403, manufactured by Shin-Etsu Chemical Co., Ltd.) were added to the above-described reaction product, thereby producing a solution with a solid content of 50%. In this manner, a main agent A-3 was produced.

### Preparation Example A4 (Main Agent A-4)

Takelac A977 (trade name, a polyester-based polyurethane polyol, a solid content concentration of 70% by mass, manufactured by Mitsui Chemicals Inc.) was prepared as a commercially available main agent.

Thereafter, 136.0g of ethyl acetate and 3.5g of an epoxy group-containing silane coupling agent (γ-glycidoxypropyltrimethoxy silane, KBM-403, manufactured by Shin-Etsu Chemical Co., Ltd.) were added to the above-described commercially available main agent. In this manner, a main agent A-4 was produced.

### Preparation Example A5 (Main Agent A-5)

657.6g of the above-described polyol B and 32.0g of 3-isocyanatomethyl-3,5,5-trimethylcyclohexylisocyanate (isophorone diisocyanate) were subjected to a urethane-forming reaction under a nitrogen atmosphere at 77 to 80°C for 3 hours.

0.20g of tin octylate was added to the above-described reaction product, and the urethane-forming reaction was further continued for 3 hours. 2.17g of a diethylene glycol was added to the above-described reaction product, and the urethane-forming reaction was further carried out for 2 hours.

Next, the above-described reaction product was cooled to 70°C. Thereafter, 305.8g of ethyl acetate and 4.5g of an epoxy group-containing silane coupling agent (γ-glycidoxypropyltrimethoxy silane, KBM-403, manufactured by Shin-Etsu Chemical Co., Ltd.) were added to the above-described reaction product, thereby producing a solution with a solid content of 50%. In this manner, a main agent A-5 was produced.

### Preparation Example A6 (Main Agent A-6)

The main agent A-1 (454.1g) and the main agent A-5 (316.6g) were mixed together. 90.0g of ethyl acetate was added to the mixture thereof, thereby adjusting the solid content concentration to 50% by mass. In this manner, the main agent A-6 was produced.

### (2) Curing Agent

### Preparation Example B1 (Curing Agent B-1)

60g of a commercially available xylylene diisocyanate derivative (trade name TAKENATE A-10, trimethylol propane adduct of XDI, manufactured by Mitsui Chemicals Inc.) and 40g of a commercially available isophorone diisocyanate derivative (trade name TAKENATE A-40E, trimethylol propane adduct of IPDI, manufactured by Mitsui Chemicals Inc.) were homogenously mixed under a nitrogen atmosphere at 50°C. In this manner, a curing agent B-1 (a NCO concentration of approximately 11%) was produced.

### Preparation Example B2 (Curing Agent B-2)

A commercially available hexamethylene diisocyanate derivative (trade name TAKENATE A-65, a biuret-modified product of HDI, manufactured by Mitsui Chemicals Inc.) was prepared as a curing agent B-2.

### Preparation Example B3 (Curing Agent B-3)

A commercially available tolylene diisocyanate derivative (trade name TAKENATE A-3, a trimethylol propane adduct of TDI, manufactured by Mitsui Chemicals Inc.) was prepared as a curing agent B-3.

### 4. Resin Film Layer

A commercially available cast polypropylene film (Tohcello CP RXC-22 (CPP film), #60, manufactured by Mitsui Chemicals Tohcello, Inc.) was prepared.

### 5. Laminate

### <First Embodiment>

### Examples 1 to 25, Examples 36 to 38, and Comparative Examples 1 to 6

### (1) Substrate and Inorganic Vapor Deposition Layer

In accordance with Tables 2 to 6, a vapor deposition film including a substrate and an inorganic vapor deposition layer was prepared.

### (2) Barrier Coat Layer

In accordance with Tables 2 to 6, a primary PUD, a cross-linking agent, a solvent, and water were mixed together, thereby preparing a secondary PUD. Next, the secondary PUD was applied onto the inorganic vapor deposition layer of the vapor deposition film by using a bar coater. The application amount was adjusted so that the thickness when dried (dry mass) became the value shown in Tables 2 to 6. Next, the secondary PUD was dried, thereby forming a barrier coat layer (overcoat layer).

When an alumina-vapor deposited PET film was used, the conditions for drying the secondary PUD were at 110°C and for 1 minute. Alternatively, when an alumina-vapor deposited OPP was used, the conditions for drying the secondary PUD were at 80°C and for 1 minute. Alternatively, when a silica-vapor deposited PET film was used, the conditions for drying the secondary PUD were at 110°C and for 1 minute. Alternatively, when a silica-vapor deposited OPP was used, the conditions for drying the secondary PUD were at 80°C and for 1 minute. Thereafter, the barrier coat layer was cured at 40 to 50°C for 2 days. In this manner, a first film including the substrate, the inorganic vapor deposition layer, and the barrier coat layer was produced.

### (3) Adhesive Layer

In accordance with Tables 2 to 6, the main agent and the curing agent were mixed together, thereby producing adhesives 1 to 8. The equivalent ratio of the isocyanate group of the curing agent to the active hydrogen group of the main agent was 1.00. Furthermore, ethyl acetate was added to the mixture of the main agent and the curing agent, thereby adjusting the solid content concentration to 25% by mass.

Next, the mixture of the main agent and the curing agent was applied onto the barrier coat layer of the first film with a bar coater and dried with a dryer. In this manner, an application layer of the two-component curable polyurethane adhesive was produced. The application layer had a dry thickness of 3.0g/m².

### (4) Resin Film Layer

A cast polypropylene film (Tohcello CP RXC-22 (CPP film), #60, manufactured by Mitsui Chemicals Tohcello, Inc.) was prepared as a second film (resin film layer).

### (5) Laminate

The second film was laminated on the application layer of the two-component curable polyurethane adhesive in the first film, and cured at 40°C for 3 days. That is to say, the first film was adhered to the second film by the adhesive layer. As described above, a laminate including the substrate, the inorganic vapor deposition layer, the barrier coat layer, the adhesive layer, and the resin film layer in sequence was produced.

### Examples 39 and 40

### (1) Substrate and Inorganic Vapor Deposition Layer

In accordance with Table 9, a vapor deposition film including a substrate and an inorganic vapor deposition layer was prepared.

### (2) Barrier Coat Layer

In accordance with Table 9, a polyurethane resin solution was applied onto an inorganic vapor deposition layer of a vapor deposition film by using a bar coater. The application amount was adjusted so that the thickness when dried (dry mass) became the value shown in Table 9. Next, the polyurethane resin solution was dried, thereby forming a barrier coat layer (overcoat layer). The drying conditions were at 110°C and for 1 minute.

Thereafter, the barrier coat layer was cured at 40 to 50°C for 2 days. In this manner, a first film including the substrate, the inorganic vapor deposition layer, and the barrier coat layer was produced.

### (3) Adhesive Layer

In accordance with Table 9, the main agent and the curing agent were mixed together, thereby producing an adhesive 2. The equivalent ratio of the isocyanate group of the curing agent to the active hydrogen group of the main agent was 1.00. Furthermore, ethyl acetate was added to the mixture of the main agent and the curing agent, thereby adjusting the solid content concentration to 25% by mass.

Next, the mixture of the main agent and the curing agent was applied onto the barrier coat layer of the first film with a bar coater and dried with a dryer. In this manner, an application layer of the two-component curable polyurethane adhesive was produced. The application layer had a dry thickness of 3.0g/m².

### (4) Resin Film Layer

A cast polypropylene film (Tohcello CP RXC-22 (CPP film), #60, manufactured by Mitsui Chemicals Tohcello, Inc.) was prepared as a second film (resin film layer).

### (5) Laminate

The second film was laminated on the application layer of the two-component curable polyurethane adhesive in the first film and cured at 40°C for 3 days. That is to say, the first film was adhered to the second film by the adhesive layer. As described above, a laminate including the substrate, the inorganic vapor deposition layer, the barrier coat layer, the adhesive layer, and the resin film layer in sequence was produced.

### <Second Embodiment>

### Examples 26 to 29 and Examples 34 and 35

### (1) Substrate

In accordance with Table 7, a substrate below was prepared.

PET; a biaxially oriented polyester film, TOYOBO ester film E5102 (trade name), a thickness of 12 µm, manufactured by TOYOBO CO., LTD.

OPP; a biaxially oriented polypropylene film, PYLEN film-OT P2171(trade name), a thickness of 20 µm, manufactured by TOYOBO CO., LTD.

### (2) Barrier Coat Layer

In accordance with Table 7, a primary PUD, a cross-linking agent, a solvent, and water were mixed together, thereby preparing a secondary PUD. Next, the secondary PUD was applied on one surface (surface) of the substrate by using a bar coater. The application amount was adjusted so that the thickness when dried (dry mass) became the value shown in Table 7. Next, the secondary PUD was dried, thereby forming a barrier coat layer (overcoat layer). Thereafter, the barrier coat layer was cured at 40 to 50°C for 2 days.

### (3) Inorganic Vapor Deposition Layer

An aluminum oxide or silicon oxide was vapor-deposited (under vacuum conditions of 1 × 10⁻⁴Pa, RH method) on one surface (surface) of the barrier coat layer (undercoat layer) by using a vacuum vapor deposition apparatus (manufactured by ULVAC, Inc.), thereby forming an inorganic vapor deposition layer. The inorganic vapor deposition layer consisting of aluminum oxide had a thickness of 10 nm. Alternatively, the inorganic vapor deposition layer consisting of silicon oxide had a thickness of 20 nm. In this manner, a first film including the substrate, the barrier coat layer, and the inorganic vapor deposition layer was produced.

### (4) Adhesive Layer

The mixture of the main agent and the curing agent of the above-described adhesive 1 was applied onto the inorganic vapor deposition layer of the first film with a bar coater and dried with a dryer. In this manner, an application layer of the two-component curable polyurethane adhesive was produced. The application layer had a dry thickness of 3.0g/m².

### (5) Resin Film Layer

A cast polypropylene film (Tohcello CP RXC-22 (CPP film), #60, manufactured by Mitsui Chemicals Tohcello, Inc.) was prepared as a second film (resin film layer)

### (6) Laminate

The second film was laminated on the application layer of the two-component curable polyurethane adhesive in the first film and cured at 40°C for 3 days. That is to say, the first film was adhered to the second film by the adhesive layer. As described above, a laminate including the substrate, the barrier coat layer, the inorganic vapor deposition layer, the adhesive layer, and the resin film layer in sequence was produced.

### <Third Embodiment>

### Examples 30 to 33

### (1) Substrate

In accordance with Table 8, a substrate below was prepared.

PET; a biaxially oriented polyester film, TOYOBO ester film E5102 (trade name), a thickness of 12 µm, manufactured by TOYOBO CO., LTD.

OPP; a biaxially oriented polypropylene film, PYLEN film-OT P2171 (trade name), a thickness of 20 µm, manufactured by TOYOBO CO., LTD.

### (2) First Barrier Coat Layer

In accordance with Table 8, a primary PUD, a cross-linking agent, a solvent, and water were mixed together, thereby preparing a secondary PUD. Next, the secondary PUD was applied onto one surface (surface) of the substrate by using a bar coater. The application amount was adjusted so that the thickness when dried (dry mass) became the value shown in Table 8. Next, the secondary PUD was dried, thereby forming a first barrier coat layer (overcoat layer). Thereafter, the first barrier coat layer was cured at 40 to 50°C for 2 days.

### (3) Inorganic Vapor Deposition Layer

An aluminum oxide or silicon oxide was vapor-deposited (under vacuum conditions of 1 × 10⁻⁴Pa, RH method) on one surface (surface) of the barrier coat layer (undercoat layer) by using a vacuum vapor deposition apparatus (manufactured by ULVAC, Inc.), thereby forming an inorganic vapor deposition layer. The inorganic vapor deposition layer consisting of aluminum oxide had a thickness of 20 nm. Alternatively, the inorganic vapor deposition layer consisting of silicon oxide had a thickness of 30 nm.

### (4) Second Barrier Coat Layer

The above-described secondary PUD (see Table 8) was applied onto one surface (surface) of the inorganic vapor deposition layer by using a bar coater. The application amount was adjusted so that the thickness when dried (dry mass) became the value shown in Table 8. Next, the secondary PUD was dried, thereby forming a second barrier coat layer (overcoat layer). Thereafter, the second barrier coat layer was cured at 40 to 50°C for 2 days.

When an alumina-vapor deposited PET film was used, the conditions for drying the secondary PUD were at 110°C and for 1 minute. Alternatively, when an alumina-vapor deposited OPP was used, the conditions for drying the secondary PUD were at 80°C and for 1 minute. Alternatively, when a silica-vapor deposited PET film was used, the conditions for drying the secondary PUD were at 110°C and for 1 minute. Alternatively, when a silica-vapor deposited OPP was used, the conditions for drying the secondary PUD were at 80°C and for 1 minute. Thereafter, the barrier coat layer was cured at 40 to 50°C for 2 days. In this manner, a first film including the substrate, the first barrier coat layer, the inorganic vapor deposition layer, and the second barrier coat layer was produced.

### (5) Adhesive Layer

The mixture of the main agent and the curing agent of the above-described adhesive 1 was applied onto the second barrier coat layer (outmost layer) of the first film with a bar coater and dried with a dryer. In this manner, an application layer of the two-component curable polyurethane adhesive was produced. The application layer had a dry thickness of 3.0g/m².

### (6) Resin Film Layer

A cast polypropylene film (Tohcello CP RXC-22 (CPP film ), #60, manufactured by Mitsui Chemicals Tohcello, Inc.) was prepared as a second film (resin film layer).

### (7) Laminate

The second film was laminated on the application layer of the two-component curable polyurethane adhesive in the first film and cured at 40°C for 3 days. That is to say, the first film was adhered to the second film by the adhesive layer. As described above, a laminate including the substrate, the inorganic vapor deposition layer, the barrier coat layer, the adhesive layer, and the resin film layer in sequence was produced.

### 6. Physical Properties

### (2) Thermal Expansion Coefficient of Barrier Coat Layer

The secondary PUD of each of Examples and Comparative Examples was put in a plastic tray and dried under the conditions of 25°C and a relative humidity of 55% for 1 day, and thereafter heated at 60°C for 5 days. In this manner, a barrier coat layer film (a thickness of 200 µm) was produced.

Next, the barrier coat layer film was cut into a length of 15mm × a width of 5mm. In this manner, a sample was produced. Thereafter, using a thermomechanical analyzer (SHIMADZU CORPORATION, TMA-50), the thermal expansion coefficient of the sample was measured in a temperature range of 40 to 120°C. The measurement conditions were set to a nitrogen atmosphere (gas flow rate of 40mL/min), load settings of 0g, and a rate of temperature increase of 10°C/min. Furthermore, the measurement was in accordance with JIS K7197 (1991).

### (2) Thermal Expansion Coefficient of Adhesive Layer

The main agent and the curing agent of each of Examples and Comparative Examples were mixed together. Furthermore, ethyl acetate was added to the mixture of the main agent and the curing agent, thereby adjusting the solid content concentration to 25% by mass.

Next, the mixture of the main agent and the curing agent was put in a plastic tray and dried under the conditions of 25°C and a relative humidity of 55% for 1 day, and thereafter heated at 60°C for 5 days. In this manner, an adhesive layer film (a thickness of 100 µm) was produced.

Next, the adhesive layer film was cut into a length of 15mm × a width of 5mm. In this manner, a sample was produced. Thereafter, using a thermomechanical analyzer (SHIMADZU CORPORATION, TMA-50), the thermal expansion coefficient of the sample was measured in a temperature range of 40 to 135°C. The measurement conditions were set to nitrogen atmosphere (gas flow rate of 40mL/min), load setting of 0 g, and a rate of increase in temperature of 10°C/min. Furthermore, the measurement was in accordance with JIS K7197 (1991).

### (3) Glass Transition Temperature of Adhesive Layer

The glass transition temperature (Tg) of the above-described adhesive layer film was measured by a method below. That is to say, using a Dynamic Viscoelastic Analyzer ("DVA-200", manufactured by IT Sokuryo Seigyo Co., Ltd.), the dynamic viscoelasticity of the film was measured at a frequency of 10Hz, a rate of temperature increase of 5°C/min, and a tensile method.

The temperature when the loss elastic modulus (E") became maximum was taken as the glass transition temperature.

### (4) Elongation percentage (Tensile Elongation) of Adhesive Layer

The elongation percentage of the above-described adhesive layer film was measured using a tension and compression test apparatus (manufactured by INTESCO co.,ltd., Model 205E) under the conditions of 23°C and a tensile rate of 300mm/min. The lower the elongation percentage is, the higher the effect of suppressing the thermal expansion is determined to be.

### (5) Percentage of Ester Group Content in Adhesive Layer

A percentage of the ester group content in the adhesive layer of each Example was calculated based on the formulations of the main agent and the curing agent.

### 7. Evaluations

### (1) Oxygen barrier properties (Gas Barrier Properties) of Laminate

Using an oxygen permeability measurement device (MOCON, OX-TRAN 2/20), the oxygen permeability of the laminate was measured. The measurement conditions were set to 20°C and a relative humidity of 80% (80% RH). Furthermore, the measurement was in accordance with JIS K7126-2 (2006). Furthermore, the oxygen permeation amount (cc/m²•day• atm) per 1m², 1 day, and 1 atmospheric pressure was measured.

Next, the laminate was immersed in hot water at 120°C for 30 minutes to carry out a hot-water treatment. Thereafter, the oxygen permeation amount of the hydrothermally treated laminate was measured under the above-described conditions.

Next, the laminate was immersed in hot water at 129°C for 45 minutes to carry out a hot-water treatment. Thereafter, the oxygen permeation amount of the hydrothermally treated laminate was measured under the above-described conditions.

### (2) Percentage of Increase in Oxygen Permeation Amount

The percentage of the increase in oxygen permeation amount was obtained according to the following formula. The higher the value of the percentage of the increase in oxygen permeation amount is, the lower the evaluation of the retort resistance is.

### [(Oxygen Permeation Amount after Hot-water Treatment - Oxygen Permeation Amount before Hot-water Treatment)/Oxygen Permeation Amount before Hot-water Treatment]

### (3) Adhesive Properties

The laminate strength of the laminate was measured by a T-peel test (a width of 15mm) in accordance with JIS K 6854 (1999).

Furthermore, the laminate was immersed in hot water at 120°C for 30 minutes to carry out a hot-water treatment. Thereafter, the laminate strength of the hydrothermally treated laminate was measured under the above-described conditions.

Furthermore, the laminate was immersed in hot water at 129°C for 45 minutes to carry out a hot-water treatment. Thereafter, the laminate strength of the hydrothermally treated laminate was measured under the above-described conditions.

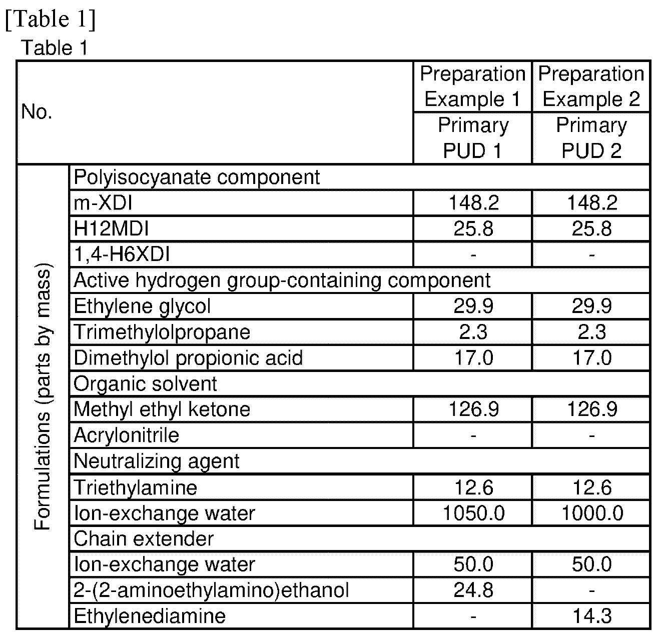

### [Table 2]

**Table 2**

| No. | | | | Example 1 | Example 2 | Example 3 | Example 4 | Example 5 | Comparative Example 1 | Comparative Example 2 | Example 6 |
|---|---|---|---|---|---|---|---|---|---|---|---|
| Disposition of polyurethane layer | | | Overcoat layer | Presence | Presence | Presence | Presence | Presence | Presence | Presence | Presence |
| | | | Undercoat layer | Absence | Absence | Absence | Absence | Absence | Absence | Absence | Absence |
| Vapor Deposition Film | Types | | | AlOxPET | AlOxPET | AlOxPET | AlOxPET | AlOxPET | AlOxPET | AlOxPET | AlOxPET |
| | Substrate | | | PET | PET | PET | PET | PET | PET | PET | PET |
| | Inorganic vapor deposition layer | | | Alumina | Alumina | Alumina | Alumina | Alumina | Alumina | Alumina | Alumina |
| | | Primary PUD | PUD 1 | - | - | - | - | - | - | - | - |
| | | | PUD 2 | 31.4 | 31.4 | 31.4 | 31.4 | 31.4 | 31.4 | 31.4 | 31.4 |
| | | Cross-linking agent | KBM-403 | - | - | - | - | - | - | - | - |
| | | | CARBODILITE V-02 | 5.4 | 5.4 | 5.4 | 5.4 | 5.4 | 5.4 | 5.4 | 5.4 |
| | Secondary PUD (parts by mass) | | CARBODILITE SV-02 | - | - | - | - | - | - | - | - |
| | | | CARBODILITE V-02-L2 | - | - | - | - | - | - | - | - |
| | | | Byhdur3100 | - | - | - | - | - | - | - | - |
| Barrier coat layer | | Solvent | 2-Propanol | 15.0 | 15.0 | 15.0 | 15.0 | 15.0 | 15.0 | 15.0 | 15.0 |
| | | Water | lon-exchanae water | 48.2 | 48.2 | 48.2 | 48.2 | 48.2 | 48.2 | 48.2 | 48.2 |
| | Dry mass | | g/m² | 0.5 | 0.5 | 0.5 | 0.5 | 0.5 | 0.5 | 0.5 | 0.5 |
| | Epoxy group, carbodiimide group, and isocyanate group in cross-linking agent /Carboxy group in polyurethane resin [Molar ratio] | | | 0.9 | 0.9 | 0.9 | 0.9 | 0.9 | 0.9 | 0.9 | 0.9 |
| | Linear expansion coefficient | | 10⁻⁵/K | 11 | 11 | 11 | 11 | 11 | 11 | 11 | 11 |
| Adhesive layer | Types | | | Adhesive 1 | Adhesive 2 | Adhesive 3 | Adhesive 4 | Adhesive 5 | Adhesive 6 | Adhesive 7 | Adhesive 8 |
| | Main agent | | | A-1 | A-2 | A-2 | A-2 | A-3 | A-4 | A-5 | A-6 |
| | Curing agent | | | B-1 | B-1 | B-2 | B-3 | B-3 | B-3 | B-1 | B-1 |
| | Linear expansion coefficient | | 10⁻⁵/K | 51.9 | 55.6 | 22.0 | 62.0 | 95.0 | 110 | 130 | 76.0 |
| | Amount of ester group | Main agent+Curing agent | mmol/g | 7.73 | 7.73 | 8.10 | 7.73 | 6.96 | - | - | 7.35 |
| | Tg | | °C | 32 | 32 | 23 | 35 | 18 | 19 | 17 | 21 |
| | Tensile elongation | | % | 373 | 370 | 338 | 352 | 418 | 512 | 560 | 418 |
| Resin film layer | Types | | | CPP | CPP | CPP | CPP | CPP | CPP | CPP | CPP |
| Evaluations | Oxygen barrier properties (Oxygen permeation amount) | Before hot-water treatment | cc/(m2·day·atm) | 0.6 | 0.6 | 0.6 | 0.6 | 0.6 | 0.6 | 0.6 | 0.6 |
| | | After hot-water treatment at 120°C | cc/(m2·day·atm) | 0.8 | 0.6 | 0.8 | 0.9 | 1.7 | 8.2 | 56 | 0.7 |
| | | After hot-water treatment at 129°C | cc/(m2·day·atm) | 0.9 | 0.7 | 0.8 | 1.2 | 89 | 88 | 100 | 1.1 |
| | Rate of increase in Oxygen permeation amount | After hot-water treatment at 120°C | % | 33% | 0% | 33% | 50% | 183% | 1267% | 9233% | 17% |
| | | After hot-water treatment at 129°C | % | 50% | 17% | 33% | 100% | 14733% | 14567% | 16567% | 83% |
| | Adhesive properties | Before hot-water treatment | N/mm² | 3.8 | 3.8 | 3.1 | 3.3 | 4.4 | 3.0 | 4.0 | 3.8 |
| | | After hot-water treatment at 120°C | N/mm² | 3.2 | 3.2 | 2.3 | 3.2 | 2.6 | 3.0 | 2.1 | 3.5 |
| | | After hot-water treatment at 129°C | N/mm² | 3.0 | 3.0 | 2.3 | 3.0 | 2.6 | 3.0 | 2.5 | 3.0 |

### [Table 3]

**Table 3**

| No. | | | | Example 7 | Example 8 | Example 9 | Example 10 | Example 11 |
|---|---|---|---|---|---|---|---|---|
| Disposition of polyurethane layer | | | Overcoat laver | Presence | Presence | Presence | Presence | Presence |
| | | | Undercoat layer | Absence | Absence | Absence | Absence | Absence |
| Vapor Deposition Film | Types | | | AlOxPET | AlOxPET | AlOxPET | AlOxPET | AlOxPET |
| | Substrate | | | PET | PET | PET | PET | PET |
| | Inorganic vapor deposition layer | | | Alumina | Alumina | Alumina | Alumina | Alumina |
| | | Primary PUD | PUD 1 | - | - | - | - | - |
| | | | PUD 2 | 40.0 | 33.5 | 34.1 | 36.0 | 34.4 |
| | | Cross-linking agent | KBM-403 | - | - | - | 1.0 | - |
| | | | CARBODILITE V-02 | - | - | - | - | - |
| | Secondary PUD (parts by mass) | | CARBODILITE SV-02 | - | 4.0 | - | - | - |
| | | | CARBODILITE V-02-L2 | - | - | 3.7 | - | - |
| Barrier coat layer | | | Byhdur3100 | - | - | - | - | 1.4 |
| | | Solvent | 2-Propanol | 15.0 | 15.0 | 15.0 | 15.0 | 15.0 |
| | | Water | Ion-exchange water | 45.0 | 47.5 | 47.2 | 48.0 | 49.2 |
| | Dry mass | | g/m² | 0.5 | 0.5 | 0.5 | 0.5 | 0.5 |
| | Epoxy group, carbodiimide group, and isocyanate group in cross-linking agent /Carboxy group in polyurethane resin [Molar ratio] | | | 0.9 | 0.9 | 0.9 | 0.9 | 1.6 |
| | Linear expansion coefficient | | 10⁻⁵/K | 12 | 10 | 10 | 10 | 10 |
| Adhesive layer | Types | | | Adhesive 1 | Adhesive 1 | Adhesive 1 | Adhesive 1 | Adhesive 1 |
| | Main agent | | | A-1 | A-1 | A-1 | A-1 | A-1 |
| | Curing agent | | | B-1 | B-1 | B-1 | B-1 | B-1 |
| | Linear expansion coefficient | | 10⁻⁵/K | 51.9 | 51.9 | 51.9 | 51.9 | 51.9 |
| | Amount of ester group | Main agent+Curing agent | mmol/g | 7.73 | 7.73 | 7.73 | 7.73 | 7.73 |
| | Tg | | °C | 32 | 32 | 32 | 32 | 32 |
| | Tensile elongation | | % | 373 | 373 | 373 | 373 | 373 |
| Resin film layer | Types | | | CPP | CPP | CPP | CPP | CPP |
| Evaluations | Oxygen barrier properties (Oxygen permeation amount) | Before hot-water treatment | cc/(m2·day·atm) | 0.8 | 0.6 | 0.6 | 0.6 | 0.6 |
| | | After hot-water treatment at 120°C | cc/(m2·day·atm) | 1.3 | 0.7 | 0.7 | 0.8 | 0.9 |
| | | After hot-water treatment at 129°C | cc/(m2·day·atm) | 2.8 | 0.9 | 0.9 | 0.9 | 0.9 |
| | Rate of increase in Oxygen permeation amount | After hot-water treatment at 120°C | % | 63% | 17% | 17% | 33% | 50% |
| | | After hot-water treatment at 129°C | % | 250% | 50% | 50% | 50% | 50% |
| | Adhesive properties | Before hot-water treatment | N/mm² | 3.6 | 3.8 | 3.7 | 3.8 | 4.2 |
| | | After hot-water treatment at 120°C | N/mm² | 3.5 | 3.0 | 3.0 | 3.1 | 3.5 |
| | | After hot-water treatment at 129°C | N/mm² | 3.0 | 2.6 | 3.0 | 3.0 | 3.4 |

### [Table 4]

**Table 4**

| No. | | | | Example 12 | Example 13 | Example 14 | Example 15 | Comparative Example 3 | Comparative Example 4 |
|---|---|---|---|---|---|---|---|---|---|
| Disposition of polyurethane layer | | | Overcoat layer | Presence | Presence | Presence | Presence | Presence | Presence |
| | | | Undercoat layer | Absence | Absence | Absence | Absence | Absence | Absence |
| Vapor Deposition Film | Types | | | AlOxPET | AlOxPET | AlOxPET | AlOxPET | AlOxPET | AlOxPET |
| | Substrate | | | PET | PET | PET | PET | PET | PET |
| | Inorganic vapor deposition layer | | | Alumina | Alumina | Alumina | Alumina | Alumina | Alumina |
| | | Primary PUD | PUD 1 | 33.3 | 26.4 | 26.4 | 26.4 | 26.4 | 26.4 |
| | | | PUD 2 | - | - | - | - | - | - |
| | | Cross-linking agent | KBM-403 | - | - | - | - | - | - |
| | | | CARBODILITE V-02 | - | 5.2 | 5.2 | 5.2 | 5.2 | 5.2 |
| | Secondary PUD (parts by mass) | | CARBODILITE SV-02 | - | - | - | - | - | - |
| | | | CARBODILITE V-02-L2 | - | - | - | - | - | - |
| | | | Byhdur3100 | - | - | - | - | - | - |
| Barrier coat layer | | Solvent | 2-Propanol | 15.0 | 15.0 | 15.0 | 15.0 | 15.0 | 15.0 |
| | | Water | lon-exchanqe water | 51.7 | 53.4 | 53.4 | 53.4 | 53.4 | 53.4 |
| | Dry mass | | g/m² | 0.5 | 0.5 | 0.5 | 0.5 | 0.5 | 0.5 |
| | Epoxy group, carbodiimide group, and isocyanate group in cross-linking agent /Carboxy group in polyurethane resin [Molar ratio] | | | - | 0.9 | 0.9 | 0.9 | 0.9 | 0.9 |
| | Linear expansion coefficient | | 10⁻⁵/K | 240 | 37 | 37 | 37 | 37 | 37 |
| Adhesive layer | Types | | | Adhesive 1 | Adhesive 1 | Adhesive 2 | Adhesive 5 | Adhesive 6 | Adhesive 7 |
| | Main agent | | | A-1 | A-1 | A-2 | A-3 | A-4 | A-5 |
| | Curing agent | | | B-1 | B-1 | B-1 | B-3 | B-3 | B-1 |
| | Linear expansion coefficient | | 10⁻⁵/K | 51.9 | 51.9 | 55.6 | 95.0 | 110 | 130 |
| | Amount of ester group | Main agent+Curing agent | mmol/g | 7.73 | 7.73 | 7.73 | 6.96 | - | - |
| | Tg | | °C | 32 | 32 | 32 | 18 | 19 | 17 |
| | Tensile elongation | | % | 373 | 373 | 370 | 418 | 512 | 560 |
| Resin film layer | Types | | | CPP | CPP | CPP | CPP | CPP | CPP |
| Evaluations | Oxygen barrier properties (Oxygen permeation amount) | Before hot-water treatment | cc/(m2·day·atm) | 0.9 | 0.6 | 0.6 | 0.6 | 0.6 | 0.6 |
| | | After hot-water treatment at 120°C | cc/(m2·day·atm) | 1.8 | 0.7 | 0.6 | 3.5 | 12 | 54 |
| | | After hot-water treatment at 129°C | cc/(m2·day·atm) | 97 | 97 | 89 | 93 | 95 | 102 |
| | Rate of increase in Oxygen permeation amount | After hot-water treatment at 120°C | % | 100% | 17% | 0% | 483% | 1900% | 8900% |
| | | After hot-water treatment at 129°C | % | 10678% | 16067% | 14733% | 15400% | 15733% | 16900% |
| | Adhesive properties | Before hot-water treatment | N/mm² | 3.4 | 4.1 | 3.8 | 3.2 | 2.9 | 3.7 |
| | | After hot-water treatment at 120°C | N/mm² | 2.3 | 4.0 | 3.5 | 1.8 | 1.8 | 1.8 |
| | | After hot-water treatment at 129°C | N/mm² | 1.8 | 3.9 | 3.3 | 1.7 | 1.7 | 1.8 |

### [Table 5]

**Table 5**

| No. | | | | Example 16 | Example 17 | Example 18 | Example 19 | Example 20 | Example 21 | Comparative Example 5 |
|---|---|---|---|---|---|---|---|---|---|---|
| Disposition of polyurethane layer | | | Overcoat layer | Presence | Presence | Presence | Presence | Presence | Presence | Presence |
| | | | Undercoat layer | Absence | Absence | Absence | Absence | Absence | Absence | Absence |
| Vapor Deposition Film | Types | | | AlOxOPP | AlOxPET | AlOxPET | AlOxPET | AlOxPET | AlOxPET | AlOxOPP |
| | Substrate | | | OPP | PET | PET | PET | PET | PET | OPP |
| | Inorganic vapor deposition layer | | | Alumina | Alumina | Alumina | Alumina | Alumina | Alumina | Alumina |
| | | Primary PUD | PUD 1 | - | - | - | - | - | - | - |
| | | | PUD 2 | 31.4 | 36.7 | 33.8 | 30.7 | 29.3 | 24.9 | 31.4 |
| | | Cross-linking agent | KBM-403 | - | - | - | - | - | - | - |
| | | | CARBODILITE V-02 | 5.4 | 2.1 | 3.9 | 5.8 | 6.7 | 9.5 | 5.4 |
| | Secondary PUD (parts by mass) | | CARBODILITE SV-02 | - | - | - | - | - | - | - |
| | | | CARBODILITE V-02-L2 | - | - | - | - | - | - | - |
| | | | Byhdur3100 | - | - | - | - | - | - | - |
| Barrier coat layer | | Solvent | 2-Propanol | 15.0 | 15.0 | 15.0 | 15.0 | 15.0 | 15.0 | 15.0 |
| | | Water | Ion-exchange water | 48.2 | 46.2 | 47.3 | 48.5 | 49.0 | 50.6 | 48.2 |
| | Dry mass | | g/m² | 0.5 | 0.5 | 0.5 | 0.5 | 0.5 | 0.5 | 0.5 |
| | Epoxy group, carbodiimide group, and isocyanate group in cross-linking agent /Carboxy group in polyurethane resin [Molar ratio] | | | 0.9 | 0.3 | 0.6 | 1.0 | 1.2 | 2.0 | 0.9 |
| | Linear expansion coefficient | | 10⁻⁵/K | 11 | 12 | 11 | 11 | 11 | 12 | 11 |
| Adhesive layer | Types | | | Adhesive 1 | Adhesive 2 | Adhesive 2 | Adhesive 2 | Adhesive 2 | Adhesive 2 | Adhesive 6 |
| | Main agent | | | A-1 | A-2 | A-2 | A-2 | A-2 | A-2 | A-4 |
| | Curing agent | | | B-1 | B-1 | B-1 | B-1 | B-1 | B-1 | B-3 |
| | Linear expansion coefficient | | 10⁻⁵/K | 51.9 | 55.6 | 55.6 | 55.6 | 55.6 | 55.6 | 110 |
| | Amount of ester group | Main agent+Curing agent | mmol/g | 7.73 | 7.73 | 7.73 | 7.73 | 7.73 | 7.73 | - |
| | Tg | | °C | 32 | 32 | 32 | 32 | 32 | 32 | 19 |
| | Tensile elongation | | % | 373 | 370 | 370 | 370 | 370 | 370 | 512 |
| Resin film layer | Types | | | CPP | CPP | CPP | CPP | CPP | CPP | CPP |
| Evaluations | Oxygen barrier properties (Oxygen permeation amount) | Before hot-water treatment | cc/(m2·day·atm) | 2.9 | 0.8 | 0.6 | 0.6 | 0.6 | 0.6 | 3.2 |
| | | After hot-water treatment at 120°C | cc/(m2·day·atm) | 3.8 | 1.3 | 0.7 | 0.6 | 0.7 | 1.6 | 36 |
| | | After hot-water treatment at 129°C | cc/(m2·day·atm) | 3.9 | 1.7 | 0.7 | 0.7 | 1.5 | 2.7 | 42 |
| | Rate of increase in Oxygen permeation amount | After hot-water treatment at 120°C | % | 31% | 63% | 17% | 0% | 17% | 167% | 1025% |
| | | After hot-water treatment at 129°C | % | 34% | 113% | 17% | 17% | 150% | 350% | 1213% |
| | Adhesive properties | Before hot-water treatment | N/mm² | 2.1 | 3.6 | 3.8 | 3.8 | 3.8 | 3.8 | 1.7 |
| | | After hot-water treatment at 120°C | N/mm² | 1.8 | 3.5 | 3.2 | 3.2 | 3.2 | 3.2 | 1.3 |
| | | After hot-water treatment at 129°C | N/mm² | 1.7 | 3.0 | 3.0 | 3.0 | 3.0 | 3.0 | 1.0 |

### [Table 6]

**Table 6**

| No. | | | | Example 22 | Example 23 | Example 24 | Example 25 | Comparative Example 6 | Example 36 | Example 37 | Example 38 |
|---|---|---|---|---|---|---|---|---|---|---|---|
| Disposition of polyurethane layer | | | Overcoat layer | Presence | Presence | Presence | Presence | Presence | Presence | Presence | Presence |
| | | | Undercoat layer | Absence | Absence | Absence | Absence | Absence | Absence | Absence | Absence |
| Vapor Deposition Film | Types | | | SiOxPET | SiOxPET | SiOxOPP | SiOxOPP | SiOxOPP | AlOxOPP | AlOxOPP | AlOxOPP |
| | Substrate | | | PET | PET | OPP | OPP | OPP | OPP | OPP | OPP |
| | Inorganic vapor deposition layer | | | Silica | Silica | Silica | Silica | Silica | Alumina | Alumina | Alumina |
| | | Primary PUD | PUD 1 | - | - | - | - | - | - | - | - |
| | | | PUD 2 | 31.4 | 36.0 | 31.4 | 36.0 | 31.4 | 31.4 | 31.4 | 31.4 |
| | | Cross-linking agent | KBM-403 | - | 1.0 | - | 1.0 | - | - | - | - |
| | | | CARBODILITE V-02 | 5.4 | - | 5.4 | - | 5.4 | 5.4 | 5.4 | 5.4 |
| | Secondary PUD (parts by mass) | | CARBODILITE SV-02 | - | - | - | - | - | - | - | - |
| | | | CARBODILITE V-02-L2 | - | - | - | - | - | - | - | - |
| | | | Byhdur3100 | - | - | - | - | - | - | - | - |
| Barrier coat layer | | Solvent | 2-Propanol | 15.0 | 15.0 | 15.0 | 15.0 | 15.0 | 15.0 | 15.0 | 15.0 |
| | | Water | Ion-exchange water | 48.2 | 48.0 | 48.2 | 48.0 | 48.2 | 48.2 | 48.2 | 48.2 |
| | Dry mass | | g/m² | 0.5 | 0.5 | 0.5 | 0.5 | 0.5 | 0.3 | 1.0 | 1.5 |
| | Epoxy group, carbodiimide group, and isocyanate group in cross-linking agent /Carboxy group in polyurethane resin [Molar ratio] | | | 0.9 | 0.9 | 0.9 | 0.9 | 0.9 | 0.9 | 0.9 | 0.9 |
| | Linear expansion coefficient | | 10⁻⁵/K | 11 | 10 | 11 | 10 | 11 | 11 | 11 | 11 |
| Adhesive layer | Types | | | Adhesive 1 | Adhesive 1 | Adhesive 1 | Adhesive 1 | Adhesive 6 | Adhesive 1 | Adhesive 1 | Adhesive 1 |
| | Main agent | | | A-1 | A-1 | A-1 | A-1 | A-4 | A-1 | A-1 | A-1 |
| | Curing agent | | | B-1 | B-1 | B-1 | B-1 | B-3 | B-1 | B-1 | B-1 |
| | Linear expansion coefficient | | 10⁻⁵/K | 51.9 | 51.9 | 51.9 | 51.9 | 110 | 51.9 | 51.9 | 51.9 |
| | Amount of ester group | Main agent+Curing aaent | mmol/g | 7.73 | 7.73 | 7.73 | 7.73 | - | 7.73 | 7.73 | 7.73 |
| | Tg | | °C | 32 | 32 | 32 | 32 | 19 | 32 | 32 | 32 |
| | Tensile elongation | | % | 373 | 373 | 373 | 373 | 512 | 373 | 373 | 373 |
| Resin film layer | Types | | | CPP | CPP | CPP | CPP | CPP | CPP | CPP | CPP |
| Evaluations | Oxygen barrier properties (Oxygen permeation amount) | Before hot-water treatment | cc/(m2·day·atm) | 2.1 | 2.2 | 3.2 | 3.0 | 3.2 | 3.0 | 2.8 | 2.8 |
| | | After hot-water treatment at 120°C | cc/(m2·day·atm) | 2.8 | 2.7 | 3.8 | 3.6 | 9.1 | 3.7 | 3.9 | 4.0 |
| | | After hot-water treatment at 129°C | cc/(m2·day·atm) | 2.9 | 3.1 | 4.1 | 3.7 | 12.0 | 3.9 | 3.9 | 4.5 |
| | Rate of increase in Oxygen permeation amount | After hot-water treatment at 120°C | % | 33% | 23% | 19% | 20% | 184% | 23% | 39% | 43% |
| | | After hot-water treatment at 129°C | % | 38% | 41% | 28% | 23% | 275% | 30% | 39% | 61% |
| | Adhesive properties | Before hot-water treatment | N/mm² | 0.7 | 1.8 | 0.4 | 1.8 | 0.6 | 2.2 | 2.1 | 2.0 |
| | | After hot-water treatment at 120°C | N/mm² | 0.9 | 2.2 | 0.5 | 2.2 | 0.7 | 1.9 | 1.8 | 1.7 |
| | | After hot-water treatment at 129°C | N/mm² | 0.9 | 2.3 | 0.5 | 2.3 | 0.7 | 1.9 | 1.8 | 1.7 |

### [Table 7]

**Table 7**

| No. | | | | Example 26 | Example 27 | Example 28 | Example 29 | Example 34 | Example 35 |
|---|---|---|---|---|---|---|---|---|---|
| Disposition of polyurethane layer | | | Overcoat layer | Absence | Absence | Absence | Absence | Absence | Absence |
| | | | Undercoat layer | Presence | Presence | Presence | Presence | Presence | Presence |
| Vapor Deposition Film | Types | | | AlOxPET | SiOxPET | AlOxOPP | SiOxOPP | AlOxOPP | AlOxOPP |
| | Substrate | | | PET | PET | OPP | OPP | OPP | OPP |
| | Inorganic vapor deposition layer | | | Alumina | Silica | Alumina | Silica | Alumina | Alumina |
| | | Primary PUD | PUD 1 | - | - | - | - | - | - |
| | | | PUD 2 | 31.4 | 31.4 | 31.4 | 31.4 | 31.4 | 31.4 |
| | | Cross-linking agent | KBM-403 | - | - | - | - | - | - |
| | | | CARBODILITE V-02 | 5.4 | 5.4 | 5.4 | 5.4 | 5.4 | 5.4 |
| | Secondary PUD (parts by mass) | | CARBODILITE SV-02 | - | - | - | - | - | - |
| | | | CARBODILITE V-02-L2 | - | - | - | - | - | - |
| | | | Byhdur3100 | - | - | - | - | - | - |
| Barrier coat layer | | Solvent | 2-Propanol | 15.0 | 15.0 | 15.0 | 15.0 | 15.0 | 15.0 |
| | | Water | lon-exchanqe water | 48.2 | 48.2 | 48.2 | 48.2 | 48.2 | 48.2 |
| | Dry mass | | g/m² | 0.5 | 0.5 | 0.5 | 0.5 | 0.2 | 1.0 |
| | Epoxy group, carbodiimide group, and isocyanate group in cross-linking agent /Carboxy group in polyurethane resin [Molar ratio] | | | 0.9 | 0.9 | 0.9 | 0.9 | 0.9 | 0.9 |
| | Linear expansion coefficient | | 10⁻⁵/K | 11 | 11 | 11 | 11 | 11 | 11 |
| Adhesive layer | Types | | | Adhesive 1 | Adhesive 1 | Adhesive 1 | Adhesive 1 | Adhesive 1 | Adhesive 1 |
| | Main agent | | | A-1 | A-1 | A-1 | A-1 | A-1 | A-1 |
| | Curing agent | | | B-1 | B-1 | B-1 | B-1 | B-1 | B-1 |
| | Linear expansion coefficient | | 10⁻⁵/K | 51.9 | 51.9 | 51.9 | 51.9 | 51.9 | 51.9 |
| | Amount of ester group | Main agent+Curing agent | mmol/g | 7.73 | 7.73 | 7.73 | 7.73 | 7.73 | 7.73 |
| | Tg | | °C | 32 | 32 | 32 | 32 | 32 | 32 |
| | Tensile elongation | | % | 373 | 373 | 373 | 373 | 373 | 373 |
| Resin film layer | Types | | | CPP | CPP | CPP | CPP | CPP | CPP |
| Evaluations | Oxygen barrier properties (Oxygen permeation amount) | Before hot-water treatment | cc/(m2·day·atm) | 1.7 | 2.0 | 3.5 | 3.3 | 3.5 | 3.5 |
| | | After hot-water treatment at 120°C | cc/(m2·day·atm) | 2.2 | 2.4 | 6.3 | 5.9 | 6.3 | 6.3 |
| | | After hot-water treatment at 129°C | cc/(m2·day·atm) | 2.3 | 2.4 | 6.5 | 6.0 | 6.5 | 6.5 |
| | Rate of increase in Oxygen permeation amount | After hot-water treatment at 120°C | % | 29% | 20% | 80% | 79% | 80% | 80% |
| | | After hot-water treatment at 129°C | % | 35% | 20% | 86% | 82% | 86% | 86% |
| | Adhesive properties | Before hot-water treatment | N/mm² | 1.0 | 1.9 | 2.1 | 2.1 | 2.1 | 2.1 |
| | | After hot-water treatment at 120°C | N/mm² | 1.2 | 2.2 | 1.8 | 1.8 | 1.8 | 1.8 |
| | | After hot-water treatment at 129°C | N/mm² | 1.3 | 2.0 | 1.7 | 1.7 | 1.7 | 1.7 |

### [Table 8]

**Table 8**

| No. | | | | Example 30 | Example 31 | Example 32 | Example 33 |
|---|---|---|---|---|---|---|---|
| Disposition of polyurethane layer | | | Overcoat layer | Presence | Presence | Presence | Presence |
| | | | Undercoat layer | Presence | Presence | Presence | Presence |
| Vapor Deposition Film | Types | | | AlOxPET | SiOxPET | AlOxOPP | SiOxOPP |
| | Substrate | | | PET | PET | OPP | OPP |
| | Inorganic vapor deposition layer | | | Alumina | Silica | Alumina | Silica |
| | | Primary PUD | PUD 1 | - | - | - | - |
| | | | PUD 2 | 31.4 | 31.4 | 31.4 | 31.4 |
| | | Cross-linking agent | KBM-403 | - | - | - | - |
| | | | CARBODILITE V-02 | 5.4 | 5.4 | 5.4 | 5.4 |
| | Secondary PUD (parts by mass) | | CARBODILITE SV-02 | - | - | - | - |
| | | | CARBODILITE V-02-L2 | - | - | - | - |
| | | | Byhdur3100 | - | - | - | - |
| Barrier coat layer | | Solvent | 2-Propanol | 15.0 | 15.0 | 15.0 | 15.0 |
| | | Water | Ion-exchange water | 48.2 | 48.2 | 48.2 | 48.2 |
| | Dry mass | | g/m² | 0.5 | 0.5 | 0.5 | 0.5 |
| | Epoxy group, carbodiimide group, and isocyanate group in cross-linking agent /Carboxy group in polyurethane resin [Molar ratio] | | | 0.9 | 0.9 | 0.9 | 0.9 |
| | Linear expansion coefficient | | 10⁻⁵/K | 11 | 11 | 11 | 11 |
| Adhesive layer | Types | | | Adhesive 1 | Adhesive 1 | Adhesive 1 | Adhesive 1 |
| | Main agent | | | A-1 | A-1 | A-1 | A-1 |
| | Curing agent | | | B-1 | B-1 | B-1 | B-1 |
| | Linear expansion coefficient | | 10⁻⁵/K | 51.9 | 51.9 | 51.9 | 51.9 |
| | Amount of ester group | Main agent+Curing agent | mmol/g | 7.73 | 7.73 | 7.73 | 7.73 |
| | Tq | | °C | 32 | 32 | 32 | 32 |
| | Tensile elongation | | % | 373 | 373 | 373 | 373 |
| Resin film layer | Types | | | CPP | CPP | CPP | CPP |
| Evaluations | Oxygen barrier properties (Oxygen permeation amount) | Before hot-water treatment | cc/(m2·day·atm) | 1.7 | 1.8 | 2.5 | 2.6 |
| | | After hot-water treatment at 120°C | cc/(m2·day·atm) | 2.6 | 2.2 | 3.2 | 3.1 |
| | | After hot-water treatment at 129°C | cc/(m2·day·atm) | 2.6 | 2.3 | 3.6 | 3.1 |
| | Rate of increase in Oxygen permeation amount | After hot-water treatment at 120°C | % | 53% | 22% | 28% | 19% |
| | | After hot-water treatment at 129°C | % | 53% | 28% | 44% | 19% |
| | Adhesive properties | Before hot-water treatment | N/mm² | 2.1 | 1.3 | 1.3 | 0.8 |
| | | After hot-water treatment at 120°C | N/mm² | 1.7 | 1.2 | 0.9 | 0.7 |
| | | After hot-water treatment at 129°C | N/mm² | 1.7 | 1.2 | 0.9 | 0.7 |

### [Table 9]

**Table 9**

| No. | | | | Example 39 | Example 40 |
|---|---|---|---|---|---|
| Disposition of polyurethane layer | | | Overcoat layer | Presence | Presence |
| | | | Undercoat layer | Absence | Absence |
| Vapor Deposition Film | Types | | | AlOxPET | AlOxPET |
| | Substrate | | | PET | PET |
| | Inorganic vapor deposition layer | | | Alumina | Alumina |
| | | PU | PU3 | 100.0 | - |
| | | | PU4 | - | 100.0 |
| | | Cross-linking agent | KBM-403 | - | - |
| | | | CARBODILITE V-02 | - | - |
| | Polyurethane resin solution (parts by mass) | | CARBODILITE SV-02 | - | - |
| | | | CARBODILITE V-02-L2 | - | - |
| | | | Byhdur3100 | - | - |
| Barrier coat layer | | Solvent | 2-Propanol | - | - |
| | | Water | Ion-exchange water | - | - |
| | Dry mass | | g/m² | 0.5 | 0.5 |
| | Epoxy group, carbodiimide group, and isocyanate group in cross-linking agent /Carboxy group in polyurethane resin [Molar ratio] | | | - | - |
| | Linear expansion coefficient | | 10⁻⁵/K | 52.1 | 26.9 |
| Adhesive layer | Types | | | Adhesive 2 | Adhesive 2 |
| | Main agent | | | A-2 | A-2 |
| | Curing agent | | | B-1 | B-1 |
| | Linear expansion coefficient | | 10⁻⁵/K | 55.6 | 55.6 |
| | Amount of ester group | Main agent+Curing agent | mmol/g | 7.73 | 7.73 |
| | Tg | | °C | 32 | 32 |
| | Tensile elongation | | % | 370 | 370 |
| Resin film layer | Types | | | CPP | CPP |
| Evaluations | Oxygen barrier properties (Oxygen permeation amount) | Before hot-water treatment | cc/(m2·day·atm) | 1.2 | 0.9 |
| | | After hot-water treatment at 120°C | cc/(m2·day·atm) | 1.4 | 1.1 |
| | | After hot-water treatment at 129°C | cc/(m2·day·atm) | 1.4 | 1.6 |
| | Rate of increase in Oxygen permeation amount | After hot-water treatment at 120°C | % | 17% | 22% |
| | | After hot-water treatment at 129°C | % | 17% | 78% |
| | Adhesive properties | Before hot-water treatment | N/mm² | 1.7 | 2.6 |
| | | After hot-water treatment at 120°C | N/mm² | 1.6 | 1.7 |
| | | After hot-water treatment at 129°C | N/mm² | 1.6 | 1.7 |

The details of the abbrevations in Table are described below.
AloxPET: Alumina-vapor deposited polyethylene terephthalate film
AloxOPP: Alumina-vapor deposited biaxially oriented polypropylene film
SiOxPET: Silica-vapor deposited polyethylene terephthalate film
SiOxOPP: Silica-vapor depisited biaxially oriented polypropylene film
KMB-403: Trade name KMB-403, epoxy silane, manufactured by Shin-Etsu Chemical Co., Ltd
CARBODILITE V-02: Carbodiimide compound, Trade name CARBODILITE V-02, a solid content concentration of 40% by mass, manufactured by Nisshimbo Chemical Inc.
CARBODILITE SV-02: Carbodiimide compound, Trade name CARBODILITE SV-02, a solid content concentration of 40% by mass, manufactured by Nisshimbo Chemical Inc.
CARBODILITE V-02-L2: Carbodiimide compound, Trade name CARBODILITE V-02-L2, a solid content concentration of 40% by mass, manufactured by Nisshinbo Chemical Inc.
Bayhydur 3100: Trade name Bayhydur 3100, Water-dispersible polyisocyanate, manufactured by BASF SE
CPP: Cast polypropylene film

### Description of Reference Numerals

- 1: laminate
- 2: substrate
- 3: inorganic vapor deposition layer
- 4: barrier coat layer
- 5: adhesive layer
- 6: resin film layer

## Claims

1. A laminate comprising:
a substrate; an inorganic vapor deposition layer; an adhesive layer; and a resin film layer in sequence,
wherein a barrier coat layer is interposed between the substrate and the inorganic vapor deposition layer and/or between the inorganic vapor deposition layer and the adhesive layer, and
wherein the adhesive layer has a thermal expansion coefficient of 100.0×10⁻⁵K⁻¹ or less.

2. The laminate according to claim 1,
wherein the barrier coat layer contains a polyurethane resin.

3. The laminate according to claim 2,
wherein the polyurethane resin includes a reaction product of an isocyanate group-terminated prepolymer and a chain extender, and
wherein the isocyanate group-terminated prepolymer includes a reaction product of a polyisocyanate component containing xylylene diisocyanate and an active hydrogen group-containing component containing a short chain diol having 2 to 6 carbon atoms and an active hydrogen group-containing compound containing a hydrophilic group.

4. The laminate according to claim 1,
wherein the adhesive layer is a cured coating film of a two-component curable polyurethane adhesive including a main agent and a curing agent, and
wherein the curing agent includes an araliphatic polyisocyanate derivative and/or an aliphatic polyisocyanate derivative.

5. The laminate according to claim 1,
wherein the adhesive layer contains an ester group, and
wherein a content ratio of the ester group to the adhesive layer is 7.00 mmol/g or more.

6. The laminate according to claim 1,
wherein the chain extender contains ethylenediamine.

7. The laminate according to claim 1,
wherein the barrier coat layer has a thermal expansion coefficient of 200×10⁻⁵K⁻¹ or less.

8. The laminate according to claim 1,
wherein the polyurethane dispersion includes a cross-linking agent, and
wherein the cross-linking agent contains at least one selected from the group consisting of an epoxy silane, a water-dispersible isocyanate, and a carbodiimide compound.
